(19) Europäisches Patentamt
European Patent Office
Office européen des brevets

(11) **EP 4 478 767 A1**

(12) **EUROPEAN PATENT APPLICATION**
published in accordance with Art. 153(4) EPC

(43) Date of publication:
**18.12.2024 Bulletin 2024/51**

(21) Application number: **23773824.0**

(22) Date of filing: **21.03.2023**

(51) International Patent Classification (IPC):
**H04W 16/22** (2009.01)

(52) Cooperative Patent Classification (CPC):
**H04L 41/16; H04W 16/22**

(86) International application number:
**PCT/CN2023/082648**

(87) International publication number:
**WO 2023/179577 (28.09.2023 Gazette 2023/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.03.2022 CN 202210283863**

(71) Applicant: **Huawei Technologies Co., Ltd.
Shenzhen, Guangdong 518129 (CN)**

(72) Inventors:
• **MA, Jianglei
Ottawa Ontario 231 (CA)**
• **GE, Yiqun
Ottawa Ontario 231 (CA)**
• **TONG, Wen
Ottawa Ontario 231 (CA)**
• **LI, Rong
Shenzhen, Guangdong 518129 (CN)**
• **WANG, Jian
Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54) **COMMUNICATION METHOD AND RELATED APPARATUS**

(57) This application provides a communication method and a related apparatus. A communication method may be used for a first processing entity of a first communication device. The method includes: The first processing entity sends a first registration request to a second entity, where the first registration request includes a first identifier, the first identifier indicates one or more of the following information of the first processing entity: model information or data information, and a model parameter of the second entity is adjusted based on a real-time environment parameter. The first processing entity receives a first registration response sent by the second entity, where the first registration response indicates an input parameter of the second entity. The first processing entity sends a first response acknowledgment, where the first response acknowledgment indicates whether an output parameter of the first processing entity matches the input parameter of the second entity. The method can adapt to an environment change and support effective data receiving and sending.

FIG. 5

## Description

This application claims priority to Chinese Patent Application No. 202210283863.9, filed with the China National Intellectual Property Administration on March 21, 2022 and entitled "COMMUNICATION METHOD AND RELATED APPARATUS", which is incorporated herein by reference in its entirety.

## TECHNICAL FIELD

This application relates to the field of communication technologies, and in particular, to a communication method and a related apparatus.

## BACKGROUND

An artificial intelligence (artificial intelligence, AI) technology will play an important role in promoting the evolution of a mobile communication network technology. For example, there is related research on applying the AI technology to a network layer (such as network optimization, mobility management, and resource allocation), a physical layer (such as channel encoding and decoding, channel prediction, and a receiver), or the like.

A current combination of AI and communication is mainly to design an AI model or a training method for a given system parameter in a specific scenario. When an environment such as a device capability, a scenario (for example, a channel condition), or the system parameter changes, a corresponding model needs to be redesigned and retrained, and it is difficult to deploy and use the combination of the AI and the communication in a universal communication system.

## SUMMARY

Embodiments of this application provide a communication method and a related apparatus, to adapt to an environment change and support effective data receiving and sending.

According to a first aspect, an embodiment of this application provides a communication method. The method is used for a first processing entity of a first communication device, and the method includes: The first processing entity sends a first registration request to a second entity, where the first registration request includes a first identifier, the first identifier indicates one or more of the following information of the first processing entity: model information or data information, and a model parameter of the second entity is adjusted based on a real-time environment parameter. The first processing entity receives a first registration response sent by the second entity, where the first registration response indicates an input parameter of the second entity. The first processing entity sends a first response acknowledgment, where the first response acknowledgment indicates whether an output parameter of the first processing entity matches the input parameter of the second entity.

Optionally, the second entity may also be referred to as a self-adaptive entity.

In the method, the first processing entity performs registration with the second entity, to determine that the output parameter of the first processing entity matches the input parameter of the second entity, where the model parameter of the second entity may be adjusted based on the real-time environment parameter. This can adapt to an environment change and support effective data receiving and sending.

In a possible implementation, the first response acknowledgment indicates a matching success, and the method further includes: The first processing entity performs first processing on first input data to obtain first output data, where the first output data is an output of the first processing entity. The first processing entity transmits the first output data to the second entity through a first interface.

In this implementation, when the output parameter of the first processing entity successfully matches the input parameter of the second entity, the first processing entity transmits the first output data to the second entity, to implement effective data transmission.

In a possible implementation, the first processing entity includes an input adaptation module, a data space conversion module, and an output adaptation module.

In this implementation, the input adaptation module and the output adaptation module of the first processing entity respectively perform processing such as dimension transformation on input data and output data of the first processing entity, to adapt an output dimension of a preprocessing module of the first processing entity to an input dimension of the data space conversion module, and adapt an output dimension of the first processing entity to an intput dimension of a subsequent processing module (for example, the second entity) of the first processing entity.

In a possible implementation, the first processing includes one or more of the following: quantization, source encoding, channel encoding, modulation, and MIMO precoding, or processing equivalent to one or more of the following: quantization, source encoding, channel encoding, modulation, and MIMO precoding.

In this implementation, one or more operations performed in conventional data receiving and sending may be implemented via the first processing entity. Compared with implementing each operation module separately in a conventional link, it is easier to implement global optimization when implementing a plurality of operations.

In a possible implementation, the first processing includes encoding and modulation, the first input data is a bitstream, and the first output data is a modulated symbol.

In a possible implementation, the first processing includes quantization, source encoding, channel encoding, and modulation, the first input data is a symbol sequence, and the first output data is a modulated symbol sequence.

It can be learned from the foregoing possible implementations that all first processing entities implementing different functions may be registered with a second entity matching the first processing entity, to implement effective data receiving and sending.

In a possible implementation, the first interface defines a procedure and/or signaling of interaction between the first processing entity and the second entity. For example, the first interface defines a transmission process of one or more of the registration request, the registration response, or the response acknowledgment.

In a possible implementation, the first response acknowledgment indicates that the output parameter of the first processing entity fails to match the input parameter of the second entity, and the method further includes: The first processing entity sends a second registration request to a fourth entity, where the second registration request includes the first identifier, the first identifier indicates one or more of the following information of the first processing entity: the model information or the data information, and a model parameter of the fourth entity may be adjusted based on the real-time environment parameter. The first processing entity receives a second registration response sent by the fourth entity, where the second registration response indicates an input parameter of the fourth entity. The first processing entity sends a second response acknowledgment, where the second response acknowledgment indicates whether the output parameter of the first processing entity matches the input parameter of the fourth entity.

In this implementation, when the output parameter of the first processing entity fails to match the input parameter of the second entity, the first processing entity may initiate registration to the fourth entity, to ensure that the first processing entity is registered with a self-adaptive entity that matches the first processing entity.

In a possible implementation, the model information includes one or more of the following: a model purpose, a model type, a model scale, model precision, or model performance.

According to this implementation, the second entity may be enabled to determine, based on the model information corresponding to the first identifier, whether the first processing entity is consistent with model information corresponding to the second entity, to determine the first registration response. Further, the first processing entity is enabled to be registered with an appropriate second entity.

In a possible implementation, the data information includes one or more of the following: a type of to-be-processed data, a dimension of to-be-processed data, or precision of to-be-processed data.

According to this implementation, the second entity may be enabled to determine, based on the data information corresponding to the first identifier, whether the first processing entity is consistent with data information corresponding to the second entity, to determine the first registration response. Further, the first processing entity is enabled to be registered with an appropriate second entity.

In a possible implementation, the output parameter of the first processing entity includes one or more of the following content of the output data of the first processing entity: a type, a dimension, or precision; and the input parameter of the second entity includes one or more of the following content of input data of the second entity: a type, a dimension, or precision.

In a possible implementation, the first processing entity and the second entity belong to a same communication device.

According to a second aspect, an embodiment of this application provides a communication method. The method is used for a second entity of a second communication device, and the method includes: The second entity receives a first registration request sent by a first processing entity, where the first registration request includes a first identifier, the first identifier indicates one or more of the following information of the first processing entity: model information or data information, and a model parameter of the second entity is adjusted based on a real-time environment parameter. The second entity sends a first registration response to the first processing entity, where the first registration response indicates an input parameter of the second entity, and the input parameter of the second entity is used to determine whether an output parameter of the first processing entity matches the input parameter of the second entity.

In the method, the second entity receives the registration request of the first processing entity, and feeds back the input parameter of the second entity to the first processing entity, so that the first processing entity determines that the output parameter of the first processing entity matches the input parameter of the second entity, where the model parameter of the second entity may be adjusted based on the real-time environment parameter. This can adapt to an environment change and support effective data receiving and sending.

In a possible implementation, the second entity receives a first response acknowledgment, where the first response acknowledgment indicates that the output parameter of the first processing entity successfully matches the input parameter of the second entity, and the method further includes: The second entity receives first output data through a first interface, where the first output data is output data of the first processing entity. The second entity performs second processing on the first output data to obtain second output data. The second entity outputs the second output data.

In a possible implementation, that the second entity outputs the second output data includes: The second entity sends the second output data to a third communication device.

In a possible implementation, that the second entity performs second processing on the first output data to obtain second output data includes: The second entity maps the first output data to the second output data. A mapping manner may be adjusted based on the real-time environment parameter.

In this implementation, the manner of mapping the first output data to the second output data is adjusted based on the real-time environment parameter. This can adapt to a changing transmission environment and support effective data receiving and sending.

In a possible implementation, the first interface defines a procedure and/or signaling of interaction between the first processing entity and the second entity. For example, the first interface defines a transmission process of one or more of the registration request, the registration response, or the response acknowledgment.

In a possible implementation, when sending the first registration response, the second entity starts first response acknowledgment timing, and when the response acknowledgment timing expires, the second entity sends a first response acknowledgment timeout indication to a first control entity.

In a possible implementation, the model information includes one or more of the following: a model purpose, a model type, a model scale, model precision, or model performance.

In a possible implementation, the data information includes one or more of the following: a type of to-be-processed data, a dimension of to-be-processed data, or precision of to-be-processed data.

In a possible implementation, the output parameter of the first processing entity includes one or more of the following content of the output data of the first processing entity: a type, a dimension, or precision; and the input parameter of the second entity includes one or more of the following content of input data of the second entity: a type, a dimension, or precision.

In a possible implementation, the first processing entity and the second entity belong to a same communication device.

For beneficial effects of the possible implementations of the second aspect, refer to beneficial effects of the possible implementations of the first aspect. Details are not described herein again.

According to a third aspect, an embodiment of this application provides a communication method. The method is used for a third processing entity of a third communication device, and the method includes: The third processing entity sends a second registration request to a second entity, where the second registration request includes a second identifier, the second identifier indicates one or more of model information or data information of the third processing entity, and a model parameter of the second entity is adjusted based on a real-time environment parameter. The third processing entity receives a second registration response sent by the second entity, where the second registration response indicates an output parameter of the second entity. The third processing entity sends a second response acknowledgment, where the second response acknowledgment indicates whether an input parameter of the third processing entity matches the output parameter of the second entity.

Optionally, the second entity may also be referred to as a self-adaptive entity.

In the method, the third processing entity performs registration with the second entity, to determine that the input parameter of the third processing entity matches the output parameter of the second entity, where the model parameter of the second entity may be adjusted based on the real-time environment parameter. This can adapt to an environment change and support effective data receiving and sending.

In a possible implementation, the second response acknowledgment indicates that the input parameter of the third processing entity matches the output parameter of the second entity, and the method further includes: The third processing entity obtains second output data transmitted by the second entity, and performs third processing on the second output data to obtain third data.

In this implementation, after the input parameter of the third processing entity successfully matches the output parameter of the second entity, the third processing entity receives the second output data transmitted by the second entity, and performs the third processing on the second output data to obtain the third data, to implement effective data transmission.

In a possible implementation, the third processing entity includes an input adaptation module, a data space conversion module, and an output adaptation module. The input configuration module is configured to adapt a dimension of the second output data to an input dimension of the data space conversion module. The data space conversion module is configured to perform the third processing on the second output data to obtain second intermediate output data. The output adaptation module is configured to perform dimension transformation on the second intermediate output data to obtain the third data.

In this implementation, the input adaptation module and the output adaptation module of the third processing entity respectively perform processing such as dimension transformation on input data and output data of the third processing entity, to adapt an output dimension of a preprocessing module (for example, the second entity) of the third processing entity to the input dimension of the data space conversion module, and adapt an output dimension of the third processing entity to an intput dimension of a subsequent processing module of the third processing entity.

In a possible implementation, the third processing is an inverse operation of the first processing in the first aspect, and the third processing includes one or more of MIMO decoding, demodulation, channel decoding, and source decoding, or processing equivalent to one or more of MIMO decoding, demodulation, channel decoding, and source decoding.

In this implementation, one or more operations performed in conventional data receiving and sending may be implemented via the third processing entity. Compared with implementing each operation module separately in a conventional link, it is easier to implement global optimization when implementing a plurality of operations.

In a possible implementation, the third processing includes demodulation and channel decoding, the second output data is a modulated symbol, and the third data is a bitstream.

In a possible implementation, the third processing includes demodulation, channel decoding, and source decoding, the second output data is a modulated symbol sequence, and the third data is a symbol sequence.

It can be learned from the foregoing possible implementations that all third processing entities implementing different functions may be registered with a second entity matching the third processing entity, to implement effective data receiving and sending.

In a possible implementation, the second interface defines a procedure and/or signaling of interaction between the third processing entity and the second entity. For example, the second interface defines a transmission process of one or more of the registration request, the registration response, or the response acknowledgment.

In a possible implementation, the second response acknowledgment indicates that the input parameter of the third processing entity fails to match the output parameter of the second entity, and the method further includes: The third processing entity sends a second registration request to a fourth entity, where the second registration request includes the second identifier, the second identifier indicates one or more of the model information or the data information of the third processing entity, and a model parameter of the fourth entity may be adjusted based on the real-time environment parameter. The third processing entity receives a second registration response sent by the fourth entity, where the second registration response indicates an input parameter of the fourth entity. The third processing entity sends a second response acknowledgment, where the second response acknowledgment indicates whether the input parameter of the third processing entity matches the input parameter of the fourth entity.

In this implementation, when the input parameter of the third processing entity fails to match the output parameter of the second entity, the third processing entity may initiate registration to the fourth entity, to ensure that the third processing entity is registered with a self-adaptive entity that matches the third processing entity.

In a possible implementation, the model information includes one or more of the following: a model purpose, a model type, a model scale, model precision, or model performance.

According to this implementation, the second entity may be enabled to determine, based on the model information corresponding to the second identifier, whether the third processing entity is consistent with model information corresponding to the second entity, to determine the second registration response. Further, the third processing entity is enabled to be registered with an appropriate second entity.

In a possible implementation, the data information includes one or more of the following: a type of to-be-processed data, a dimension of to-be-processed data, or precision of to-be-processed data.

According to this implementation, the second entity may be enabled to determine, based on the data information corresponding to the second identifier, whether the third processing entity is consistent with data information corresponding to the second entity, to determine the second registration response. Further, the third processing entity is enabled to be registered with an appropriate second entity.

In a possible implementation, the input parameter of the third processing entity includes one or more of a type, a dimension, or precision of the input data of the third processing entity, and the output parameter of the second entity includes one or more of a type, a dimension, or precision of output data of the second entity.

According to a fourth aspect, an embodiment of this application provides a communication method. The method is used for a second entity of a fourth communication device, and the method includes: The second entity receives a second registration request sent by a third processing entity, where the second registration request includes a second identifier, the second identifier indicates one or more of model information or data information of the third processing entity, and a model parameter of the second entity is adjusted based on a real-time environment parameter. The second entity sends a second registration response to the third processing entity, where the second registration response indicates an output parameter of the second entity, and the output parameter of the second entity is used to determine whether an input parameter of the third processing entity matches the output parameter of the second entity.

In the method, the second entity receives the registration request of the third processing entity, and feeds back the output parameter of the second entity to the third processing entity, so that the third processing entity determines that the input parameter of the third processing entity matches the output parameter of the second entity, where the model parameter of the second entity may be adjusted based on the real-time environment parameter. This can adapt to an environment change and support effective data receiving and sending.

In a possible implementation, the second entity receives a second response acknowledgment, where the second response acknowledgment indicates that the input parameter of the third processing entity successfully matches the output parameter of the second entity, and the method further includes: The second entity performs second processing on first output data to obtain second output data, where the first output data is output data of a first processing entity. The second entity transmits the second output data to the third processing entity through a second interface.

In a possible implementation, that the second entity performs second processing on first output data to obtain second output data includes: The second entity maps the first output data to the second output data. A mapping manner may be adjusted based on the real-time environment parameter.

In this implementation, a manner of mapping the first output data to the second output data is adjusted based on the real-time environment parameter. This can adapt to a changing transmission environment and support effective data receiving and sending.

In a possible implementation, the second interface defines a procedure and/or signaling of interaction between the third processing entity and the second entity. For example, the second interface defines a transmission process of one or more of the registration request, the registration response, or the response acknowledgment.

In a possible implementation, when sending the second registration response, the second entity starts second response acknowledgment timing, and when the response acknowledgment timing expires, the second entity sends a second response acknowledgment timeout indication to a third control entity.

In a possible implementation, the model information includes one or more of the following: a model purpose, a model type, a model scale, model precision, or model performance.

In a possible implementation, the data information includes one or more of the following: a type of to-be-processed data, a dimension of to-be-processed data, or precision of to-be-processed data.

In a possible implementation, the input parameter of the third processing entity includes one or more of a type, a dimension, or precision of input data of the third processing entity, and the output parameter of the second entity includes one or more of a type, a dimension, or precision of output data of the second entity.

For beneficial effects of the possible implementations of the third aspect and the fourth aspect, refer to beneficial effects of the possible implementations of the first aspect. Details are not described herein again.

According to a fifth aspect, an embodiment of this application further provides a communication apparatus. The communication apparatus may be used in the first processing entity in the first aspect. The communication apparatus may be a terminal or a network device, may be an apparatus (for example, a chip, a chip system, or a circuit) in a terminal or a network device, or may be an apparatus that can be used with a terminal or a network device.

In a possible implementation, the communication apparatus may include modules or units that one to one correspond to the methods/operations/steps/actions described in the first aspect. The modules or units may be hardware circuits, software, or may be implemented by a hardware circuit in combination with software.

In a possible implementation, the communication apparatus may include a processing unit and a transceiver unit. The processing unit is configured to invoke the transceiver unit to perform a receiving function and/or a sending function. Specifically, the transceiver unit is configured to send a first registration request to a second entity, where the first registration request includes a first identifier, the first identifier indicates one or more of model information or data information of the communication apparatus, and a model parameter of the second entity is adjusted based on a real-time environment parameter. The transceiver unit is further configured to receive a first registration response sent by the second entity, where the first registration response indicates an input parameter of the second entity. The transceiver unit is further configured to send a first response acknowledgment, where the first response acknowledgment indicates whether an output parameter of the first processing entity matches the input parameter of the second entity.

In a possible implementation, the processing unit is further configured to perform first processing on first input data to obtain first output data. The transceiver unit is further configured to transmit the first output data to the second entity through a first interface.

In a possible implementation, the transceiver unit includes an input adaptation module and an output adaptation module, and the processing unit includes a data space conversion module. The input configuration module is configured to adapt a dimension of the first input data to an input dimension of the data space conversion module. The data space conversion module is configured to perform the first processing on the first input data to obtain first intermediate output data. The output adaptation module is configured to perform dimension transformation on the first intermediate output data to obtain the first output data.

In a possible implementation, the first processing includes one or more of the following: quantization, source encoding, channel encoding, modulation, and MIMO precoding, or processing equivalent to one or more of the following: quantization, source encoding, channel encoding, modulation, and MIMO precoding.

In a possible implementation, the first response acknowledgment indicates that the output parameter of the communication apparatus fails to match the input parameter of the second entity. The transceiver unit is further configured to send a second registration request to a fourth entity, where the second registration request includes the first identifier, the first identifier indicates one or more of the following information of the first processing entity: the model information or the data information, and a model parameter of the fourth entity may be adjusted based on the real-time environment parameter. The transceiver unit is further configured to receive a second registration response sent by the fourth entity, where the second registration response indicates an input parameter of the fourth entity. The transceiver unit is further configured to send a second response acknowledgment, where the second response acknowledgment indicates whether the output parameter of the first processing entity matches the input parameter of the fourth entity.

In a possible implementation, the model information includes one or more of the following: a model purpose, a model type, a model scale, model precision, or model performance.

In a possible implementation, the data information includes one or more of the following: a type of to-be-processed data, a dimension of to-be-processed data, or precision of to-be-processed data.

In a possible implementation, the output parameter of the first processing entity includes one or more of the following content of output data of the first processing entity: a type, a dimension, or precision; and the input parameter of the second entity includes one or more of the following content of input data of the second entity: a type, a dimension, or precision.

In a possible implementation, the communication apparatus and the second entity belong to a same communication device.

In a possible implementation, the processing unit is a processor, and the transceiver unit is a transceiver.

According to a sixth aspect, an embodiment of this application further provides a communication apparatus. The communication apparatus may be used in the second entity in the second aspect. The communication apparatus may be a terminal or a network device, may be an apparatus (for example, a chip, a chip system, or a circuit) in a network device, or may be an apparatus that can be used with a network device.

In a possible implementation, the communication apparatus may include modules or units that one to one correspond to the methods/operations/steps/actions described in the second aspect. The modules or units may be hardware circuits, software, or may be implemented by a hardware circuit in combination with software.

In a possible implementation, the communication apparatus may include a processing unit and a transceiver unit. The processing unit is configured to invoke the transceiver unit to perform a receiving function and/or a sending function. Specifically, the transceiver unit is configured to receive a first registration request sent by a first processing entity, where the first registration request includes a first identifier, the first identifier indicates one or more of the following information of the first processing entity: model information or data information, and a model parameter of the communication apparatus is adjusted based on a real-time environment parameter. The transceiver unit is configured to send a first registration response to the first processing entity, where the first registration response indicates an input parameter of the communication apparatus, and the input parameter of the communication apparatus is used to determine whether an output parameter of the first processing entity matches the input parameter of the communication apparatus.

In a possible implementation, the transceiver unit is configured to receive a first response acknowledgment, where the first response acknowledgment indicates that the output parameter of the first processing entity successfully matches the input parameter of the communication apparatus. The transceiver unit is further configured to receive first output data through a first interface, where the first output data is output data of the first processing entity. The processing unit is configured to perform second processing on the first output data to obtain second output data. The transceiver unit is further configured to output the second output data.

In a possible implementation, the transceiver unit is specifically configured to send the second output data to a third communication device.

In a possible implementation, the processing unit is specifically configured to map the first output data to the second output data. A mapping manner may be adjusted based on the real-time environment parameter.

In a possible implementation, the processing unit is further configured to start first response acknowledgment timing when the transceiver unit sends the first registration response. The transceiver unit is further configured to send a first response acknowledgment timeout indication to a first control entity when the response acknowledgment timing expires.

In a possible implementation, the model information includes one or more of the following: a model purpose, a model type, a model scale, model precision, or model performance.

In a possible implementation, the data information includes one or more of the following: a type of to-be-processed data, a dimension of to-be-processed data, or precision of to-be-processed data.

In a possible implementation, the output parameter of the first processing entity includes one or more of the following content of the output data of the first processing entity: a type, a dimension, or precision; and the input parameter of the second entity includes one or more of the following content of input data of the second entity: a type, a dimension, or precision.

In a possible implementation, the communication apparatus and the first processing entity belong to a same communication device.

According to a seventh aspect, an embodiment of this application further provides a communication apparatus. The communication apparatus may be used in the third processing entity in the third aspect. The communication apparatus may be a terminal or a network device, may be an apparatus (for example, a chip, a chip system, or a circuit) in a terminal or a network device, or may be an apparatus that can be used with a terminal or a network device.

In a possible implementation, the communication apparatus may include modules or units that one to one correspond to the methods/operations/steps/actions described in the third aspect. The modules or units may be hardware circuits, software, or may be implemented by a hardware circuit in combination with software.

In a possible implementation, the communication apparatus may include a processing unit and a transceiver unit. The processing unit is configured to invoke the transceiver unit to perform a receiving function and/or a sending function. Specifically, the transceiver unit is configured to send a second registration request to a second entity, where the second registration request includes a second identifier, the second identifier indicates one or more of model information or data information of the communication apparatus, and a model parameter of the second entity is adjusted based on a real-time environment parameter. The transceiver unit is further configured to receive a second registration response sent by the second entity, where the second registration response indicates an output parameter of the second entity. The transceiver unit is further configured to send a second response acknowledgment, where the second response acknowledgment indicates whether an input parameter of the communication apparatus matches the output parameter of the second entity.

In a possible implementation, the second response acknowledgment indicates that the input parameter of the third processing entity matches the output parameter of the second entity, the transceiver unit is further configured to obtain second output data transmitted by the second entity, and the processing unit is further configured to perform third processing on the second output data to obtain third data.

In a possible implementation, the transceiver unit includes an input adaptation module and an output adaptation module, and the processing unit includes a data space conversion module. The input configuration module is configured to adapt a dimension of the second output data to an input dimension of the data space conversion module. The data space conversion module is configured to perform the third processing on the second output data to obtain second intermediate output data. The output adaptation module is configured to perform dimension transformation on the second intermediate output data to obtain the third data.

In a possible implementation, the third processing is an inverse operation of the first processing in the first aspect, and the third processing includes one or more of MIMO decoding, demodulation, channel decoding, and source decoding, or processing equivalent to one or more of MIMO decoding, demodulation, channel decoding, and source decoding.

In a possible implementation, the second response acknowledgment indicates that the input parameter of the third processing entity fails to match the output parameter of the second entity. The transceiver unit is further configured to send a second registration request to a fourth entity, where the second registration request includes the second identifier, the second identifier indicates one or more of the model information or the data information of the third processing entity, and a model parameter of the fourth entity may be adjusted based on the real-time environment parameter. The transceiver unit is further configured to receive a second registration response sent by the fourth entity, where the second registration response indicates an input parameter of the fourth entity. The transceiver unit is further configured to send a second response acknowledgment, where the second response acknowledgment indicates whether the input parameter of the third processing entity matches the input parameter of the fourth entity.

According to an eighth aspect, an embodiment of this application further provides a communication apparatus. The communication apparatus may be used in the second entity in the fourth aspect. The communication apparatus may be a terminal or a network device, may be an apparatus (for example, a chip, a chip system, or a circuit) in a terminal or a network device, or may be an apparatus that can be used with a terminal or a network device.

In a possible implementation, the communication apparatus may include modules or units that one to one correspond to the methods/operations/steps/actions described in the fourth aspect. The modules or units may be hardware circuits, software, or may be implemented by a hardware circuit in combination with software.

In a possible implementation, the communication apparatus may include a processing unit and a transceiver unit. The processing unit is configured to invoke the transceiver unit to perform a receiving function and/or a sending function. Specifically, the transceiver unit is configured to receive a second registration request sent by a third processing entity, where the second registration request includes a second identifier, the second identifier indicates one or more of model information or data information of the third processing entity, and a model parameter of the communication apparatus is adjusted based on a real-time environment parameter. The transceiver unit is configured to send a second registration response to the third processing entity, where the second registration response indicates an output parameter of the communication apparatus, and the output parameter of the communication apparatus is used to determine whether an input parameter of the third processing entity matches the output parameter of the second entity.

In a possible implementation, the transceiver unit is configured to receive a second response acknowledgment, where the second response acknowledgment indicates that the input parameter of the third processing entity successfully matches the output parameter of the communication apparatus. The processing unit is configured to perform second processing on first output data to obtain second output data, where the first output data is output data of a first processing entity. The transceiver unit is further configured to output the second output data.

The second processing is performed on the first output data to obtain the second output data, and the transceiver unit is further configured to output the second output data.

In a possible implementation, the processing unit is specifically configured to map the first output data to the second output data. A mapping manner may be adjusted based on the real-time environment parameter.

In a possible implementation, the processing unit is further configured to start second response acknowledgment timing when the transceiver unit sends the second registration response. The transceiver unit is further configured to send a second response acknowledgment timeout indication to a third control entity when the response acknowledgment timing expires.

In a possible implementation, the model information includes one or more of the following: a model purpose, a model type, a model scale, model precision, or model performance.

In a possible implementation, the data information includes one or more of the following: a type of to-be-processed data, a dimension of to-be-processed data, or precision of to-be-processed data.

In a possible implementation, the input parameter of the third processing entity includes one or more of a type, a dimension, or precision of input data of the third processing entity, and the output parameter of the second entity includes one or more of a type, a dimension, or precision of output data of the second entity.

According to a ninth aspect, an embodiment of this application further provides a communication apparatus. The communication apparatus includes a processor, and is configured to implement the method in the first aspect or any one of the possible implementations of the first aspect. In a possible implementation, the processor implements the foregoing method by using a logic circuit. In another possible implementation, the processor implements the foregoing method by executing instructions.

Specifically, the processor is configured to output a first registration request, where the first registration request includes a first identifier, the first identifier indicates one or more of model information or data information of the communication apparatus, and a model parameter of a second entity is adjusted based on a real-time environment parameter. The processor is further configured to receive a first registration response sent by the second entity, where the first registration response indicates an input parameter of the second entity. The processor is further configured to send a first response acknowledgment, where the first response acknowledgment indicates whether an output parameter of a first processing entity matches the input parameter of the second entity.

In a possible implementation, a processing unit is further configured to perform first processing on first input data to obtain first output data, and transmit the first output data to the second entity through a first interface.

According to a tenth aspect, an embodiment of this application further provides a communication apparatus. The communication apparatus includes a processor, and is configured to implement the method in the second aspect or any one of the possible implementations of the second aspect. In a possible implementation, the processor implements the foregoing method by using a logic circuit. In another possible implementation, the processor implements the foregoing method by executing instructions.

Specifically, the processor is configured to receive a first registration request sent by a first processing entity, where the first registration request includes a first identifier, the first identifier indicates one or more of the following information of the first processing entity: model information or data information, and a model parameter of the communication apparatus is adjusted based on a real-time environment parameter. The processor outputs a first registration response, where the first registration response indicates an input parameter of the communication apparatus, and the input parameter of the communication apparatus is used to determine whether an output parameter of the first processing entity matches the input parameter of the communication apparatus.

According to an eleventh aspect, an embodiment of this application further provides a communication apparatus. The communication apparatus includes a processor, and is configured to implement the method in the third aspect or any one of the possible implementations of the third aspect. In a possible implementation, the processor implements the foregoing method by using a logic circuit. In another possible implementation, the processor implements the foregoing method by executing instructions. Optionally, the communication apparatus further includes a memory configured to store the instructions.

Specifically, the processor is configured to output a second registration request, where the second registration request includes a second identifier, the second identifier indicates one or more of model information or data information of the communication apparatus, and a model parameter of a second entity is adjusted based on a real-time environment parameter. The processor is further configured to receive a second registration response sent by the second entity, where the second registration response indicates an output parameter of the second entity. The processor is further configured to output a second response acknowledgment, where the second response acknowledgment indicates whether an input parameter of the communication apparatus matches the output parameter of the second entity.

According to a twelfth aspect, an embodiment of this application further provides a communication apparatus. The communication apparatus includes a processor, and is configured to implement the method in the fourth aspect or any one of the possible implementations of the fourth aspect. In a possible implementation, the processor implements the foregoing method by using a logic circuit. In another possible implementation, the processor implements the foregoing method by executing instructions. Optionally, the communication apparatus further includes a memory configured to store the instructions.

Specifically, the processor is configured to receive a second registration request sent by a third processing entity, where the second registration request includes a second identifier, the second identifier indicates one or more of model information or data information of the third processing entity, and a model parameter of the communication apparatus is adjusted based on a real-time environment parameter. The processor is further configured to output a second registration response, where the second registration response indicates an output parameter of the communication apparatus, and the output parameter of the communication apparatus is used to determine whether an input parameter of the third processing entity matches the output parameter of the communication apparatus.

According to a thirteenth aspect, an embodiment of this application further provides a communication apparatus. The communication apparatus includes a processor, and is configured to execute a computer program (or computer-executable instructions) stored in a memory. When the computer program (or the computer-executable instructions) is executed, the apparatus is enabled to perform the method in the first aspect or any one of the possible implementations of the first aspect, the method in the second aspect or any one of the possible implementations of the second aspect, the method in the third aspect or any one of the possible implementations of the third aspect, or the method in the fourth aspect or any one of the possible implementations of the fourth aspect.

In a possible implementation, the processor and the memory are integrated together.

In another possible implementation, the memory is located outside the communication apparatus.

The communication apparatus further includes a communication interface. The communication interface is used by the communication apparatus to communicate with another device, for example, to send or receive data and/or a signal. For example, the communication interface may be a transceiver, a circuit, a bus, a module, or another type of communication interface.

According to a fourteenth aspect, an embodiment of this application further provides a communication apparatus, and the communication apparatus is configured to perform the method in the first aspect or any one of the possible implementations of the first aspect.

According to a fifteenth aspect, an embodiment of this application further provides a communication apparatus, and the communication apparatus is configured to perform the method in the second aspect or any one of the possible implementations of the second aspect, and/or the method in the fourth aspect or any one of the possible implementations of the fourth aspect.

According to a sixteenth aspect, an embodiment of this application further provides a communication apparatus, and the communication apparatus is configured to perform the method in the third aspect or any one of the possible implementations of the third aspect.

For beneficial effects brought by the communication apparatuses in the fifth aspect to the sixteenth aspect and the possible implementations of the fifth aspect to the sixteenth aspect, refer to the beneficial effects of the method in the first aspect and the possible implementations of the first aspect. Details are not described herein again.

According to a seventeenth aspect, an embodiment of this application further provides a computer-readable storage medium. The computer-readable storage medium stores a computer program (or computer-executable instructions), and when the computer program (or the computer-executable instructions) is executed by a processor, some or all steps of the method in the first aspect and any possible implementation of the first aspect, the second aspect and any possible implementation of the second aspect, the third aspect and any possible implementation of the third aspect, or the fourth aspect and any possible implementation of the fourth aspect are performed.

According to an eighteenth aspect, an embodiment of this application further provides a computer program product including computer-executable instructions. When the computer program product is run, some or all steps of the method in the first aspect and any possible implementation of the first aspect, the second aspect and any possible implementation of the second aspect, the third aspect and any possible implementation of the third aspect, or the fourth aspect and any possible implementation of the fourth aspect are performed.

According to a nineteenth aspect, an embodiment of this application further provides a computer program including computer-executable instructions. When the computer program is run, some or all steps of the method in the first aspect and any possible implementation of the first aspect, the second aspect and any possible implementation of the second aspect, the third aspect and any possible implementation of the third aspect, or the fourth aspect and any possible implementation of the fourth aspect are performed.

According to a twentieth aspect, an embodiment of this application further provides a chip system. The chip system includes a processor, may further include a memory, and is configured to implement the method in the first aspect and any possible implementation of the first aspect, the second aspect and any possible implementation of the second aspect, the third aspect and any possible implementation of the third aspect, or the fourth aspect and any possible implementation of the fourth aspect. The chip system may include a chip, or may include a chip and another discrete component.

According to a twenty-first aspect, an embodiment of this application further provides a communication system. The communication system includes the communication apparatus provided in the fifth aspect or any one of the possible implementations of the fifth aspect, the communication apparatus provided in the sixth aspect or the eighth aspect or any one of the possible implementations of the sixth aspect or the eighth aspect, and the communication apparatus provided in the seventh aspect or any one of the possible implementations of the seventh aspect.

## BRIEF DESCRIPTION OF DRAWINGS

The following describes some accompanying drawings in embodiments of this application:

FIG. 1 is a diagram of a structure of an autoencoder;
FIG. 2 is a diagram of an architecture of a communication system to which an embodiment of this application is applicable;
FIG. 3 is a diagram of an artificial intelligence communication transceiver;
FIG. 4 is a diagram of a communication architecture according to an embodiment of this application;
FIG. 5 is a diagram of interaction in a communication method 500 according to an embodiment of this application;
FIG. 6 is a diagram of interaction in a communication method 600 according to an embodiment of this application;
FIG. 7 is a diagram of interaction in a communication method 700 according to an embodiment of this application;
FIG. 8 is a diagram of interaction in a communication method 800 according to an embodiment of this application;
FIG. 9 is a diagram of interaction in a communication method 900 according to an embodiment of this application;
FIG. 10 is a diagram of interaction in a communication method 900 according to an embodiment of this application;
FIG. 11 is a diagram of a structure of a processing entity according to an embodiment of this application;
FIG. 12 is a diagram of a structure of a self-adaptive entity according to an embodiment of this application;
FIG. 13 shows an example in which a method provided in an embodiment of this application is implemented by using a neural network and a self-adaptive iteration algorithm;
FIG. 14 is a diagram of a structure of a communication apparatus according to an embodiment of this application;

FIG. 15 is a diagram of a structure of a communication apparatus according to an embodiment of this application; and
FIG. 16 is a diagram of a structure of a communication apparatus according to an embodiment of this application.

## DESCRIPTION OF EMBODIMENTS

Embodiments of this application provide a communication method and a related apparatus, to adapt to an environment change and support effective data receiving and sending.

The following describes embodiments of this application with reference to the accompanying drawings in embodiments of this application.

First, terms in embodiments of this application are explained.

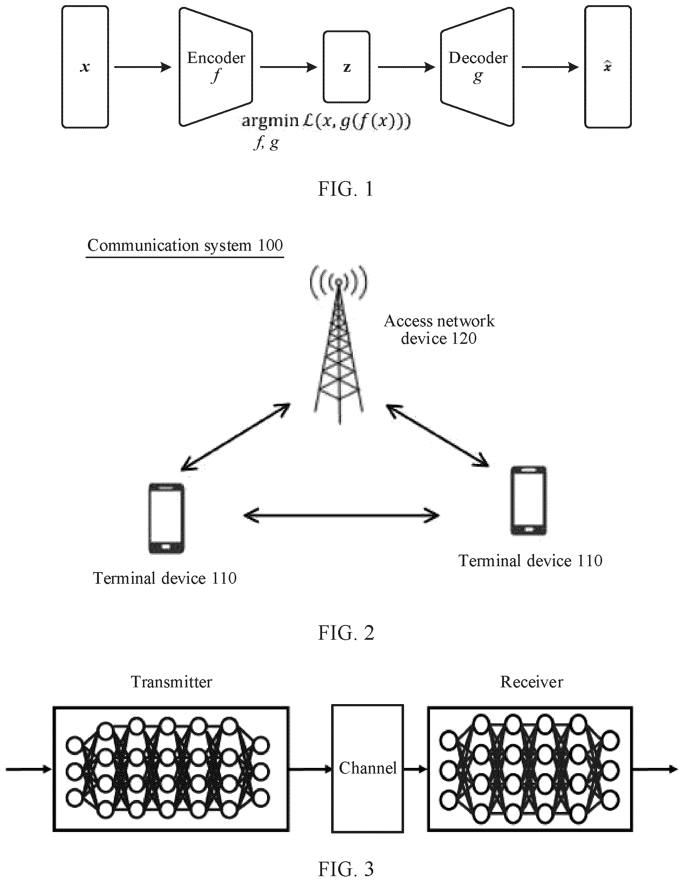

An autoencoder (AutoEncoder) in embodiments of this application is an AI technology. FIG. 1 is a diagram of a structure of the autoencoder. As shown in FIG. 1, input data x is mapped/compressed to a variable z in a latent space (latent space) by using an $f$ function (encoder (Encoder)), and then data $\hat{x}$ is restored from the variable $z$ in the latent space by using a $g$ function (decoder (Decoder)), where $\hat{x} = g(f(x))$, and the $f$ function and the $g$ function may be implemented by using a neural network. In this way, an optimization objective may be $\mathrm{argmin}_{f,g}\ \mathcal{L}(x,g(f(x)))$, where the $\mathrm{argmin}_{f,g}\ \mathcal{L}(x,g(f(x)))$ indicates to search for parameters of the $f$ function and the $g$ function, to minimize an error of the restored data. Generally, a task completed by a communication system is similar to that completed by the autoencoder, and the communication system may be compared to a distributed autoencoder (distributed AutoEncoder, DAE). For a wireless communication system, it may be considered that a transmitter sends a variable in the latent space (waveform) through a channel, and information restoration is performed at a receiver. An autoencoder in the computer field assumes that forward propagation and back propagation between an encoder and a decoder are ideal propagation. However, in the wireless communication system, a channel is variable. Therefore, impact caused by channel transmission needs to be considered in a training process and an inference process.

"/" in this application represents "or". A term "and/or" describes only an association relationship for describing associated objects and represents that three relationships may exist. For example, B and/or C may represent the following three cases: Only B exists, both B and C exist, and only C exists. In the specification and claims of embodiments of this application, terms such as "first" and "second" are intended to distinguish between different objects, and are not intended to describe a particular order of the objects unless otherwise specified. For example, a first communication apparatus and a second communication apparatus are used to distinguish different communication apparatuses, and are not intended to describe a particular order of target objects. In embodiments of this application, words such as "example" or "for example" are used to indicate an example, an illustration, or a description, and any embodiment or solution described as "example" or "for example" in embodiments of this application should not be construed as being preferred or having more advantages over other embodiments or design solutions. In the descriptions of embodiments of this application, unless otherwise stated, "a plurality of" means two or more than two. For example, a plurality of processing units means two or more processing units.

Technical solutions of this application may be applied to a cellular system related to a 3rd generation partnership project (3rd generation partnership project, 3GPP), for example, a 4th generation (4th generation, 4G) communication system such as a long term evolution (long term evolution, LTE) system, a 5th generation (5th generation, 5G) communication system such as a new radio (new radio, NR) system, a communication system that supports convergence of a plurality of wireless technologies, or an evolved communication system after 5G.

FIG. 1 shows an example of a communication system to which an embodiment of this application is applicable. Refer to FIG. 1. The communication system 100 includes at least one terminal device 110 and at least one access network device 120.

The terminal device 110 mentioned in this embodiment of this application may be a device having a wireless transceiver function, and may communicate with the access network device 120 or another terminal device. The terminal device 110 may specifically be user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device may alternatively be a satellite phone, a cellular phone, a smartphone, a wireless data card, a wireless modem, a machine-type communication device, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, an in-vehicle device, a communication device carried on a high-altitude aircraft, a wearable device, an uncrewed aerial vehicle, a robot, a terminal in device-to-device (device-to-device, D2D) communication, a terminal in vehicle-to-everything (vehicle to everything, V2X), a virtual reality (virtual reality, VR) terminal device, an augmented reality (augmented reality, AR) terminal device, a wireless terminal in industrial control (industrial control), a wireless terminal in self-driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in an evolved communication network after the 5G, or the like. This is not limited in this application.

The access network device 120 is a device having a wireless transceiver function, and is configured to communicate with the terminal device 110. The access network device may be a node in a radio access network (radio access network, RAN), may be referred to as a RAN node or a network device, or may be referred to as a base station. The access network device may be an evolved NodeB (evolved NodeB, eNB or eNodeB) in the LTE, a base station in a 5G network such as a gNodeB (gNB), a base station in an evolved public land mobile network (public land mobile network, PLMN) after the 5G, a non-3rd generation partnership project (3rd generation partnership project, 3GPP) access device, or the like. Optionally, network devices in this embodiment of this application may include various forms of base stations, for example, a macro base station, a micro base station (also referred to as a small cell), a relay station, a transmitting and receiving point (transmitting and receiving point, TRP), a transmitting point (transmitting point, TP), and devices that function as base stations in a mobile switching center, device-to-device (Device-to-Device, D2D), vehicle-to-everything (vehicle-to-everything, V2X), and machine-to-machine (machine-to-machine, M2M) communication. The network devices may further include a central unit (central unit, CU) and a distributed unit (distributed unit, DU) in a cloud radio access network (cloud radio access network, C-RAN) system, and a network device in a non-terrestrial network (non-terrestrial network, NTN) communication system. This is not specifically limited in this embodiment of this application.

The communication system shown in FIG. 2 may further include a core network device (not shown in the figure). The access network device 120 may interact with the core network device, to provide a communication service for the terminal. For example, the core network device may provide communication connection, authentication, management, and policy control for the terminal, bear a data service, and the like.

In this embodiment of this application, an apparatus configured to implement a function of the terminal device may be a terminal device, or may be an apparatus that can support the terminal device in implementing the function, for example, a chip system. The apparatus may be mounted in the terminal device or used with the terminal device. In this embodiment of this application, the chip system may include a chip, or may include a chip and another discrete component.

In this embodiment of this application, an apparatus configured to implement a function of the access network device may be an access network device, or may be an apparatus that can support the access network device in implementing the function, for example, a chip system. The apparatus may be mounted in the access network device or used with the access network device.

In this embodiment of this application, the terminal device may further have an AI processing capability, and the access network device may also have the AI processing capability. This is applicable to a scenario in which AI and communication are combined. A possible scenario in which the AI and the communication are combined is an AI communication transceiver. As shown in FIG. 3, one or more modules of a transmitter and a receiver are implemented via an AI model (for example, a neural network), to obtain excellent global performance.

A current combination of the AI and the communication is mainly to design an AI model or a training method for a given system parameter in a specific scenario. When an environment such as a device capability, a scenario (for example, a channel condition), or the system parameter changes, a corresponding model needs to be redesigned and retrained, and it is difficult to deploy and use the combination of the AI and the communication in a universal communication system.

To resolve the foregoing problem, embodiments of this application provide a communication method, a related apparatus, and a system, to adapt to a change in an environment such as a channel condition and a user requirement and implement effective data receiving and sending.

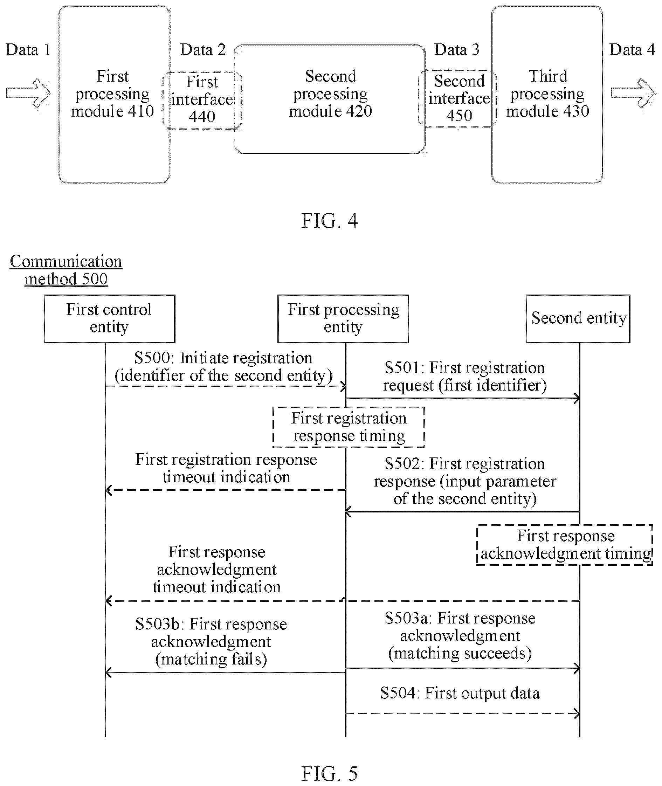

FIG. 4 is a diagram of an architecture of a communication system according to an embodiment of this application. As shown in FIG. 4, the architecture of the communication system includes a first processing module 410, a second processing module 420, a third processing module 430, a first interface 440, and a second interface 450. The first processing module 410 obtains and processes data 1 to obtain data 2, and transmits the data 2 to the second processing module 420 through the first interface 440. The second processing module 420 obtains and processes the data 2 to obtain data 3, and transmits the data 3 to the third processing module 430 through the second interface 450. The third processing module 430 obtains and processes the data 2 to obtain data 4.

The first processing module 410 may be disposed at a transmitting end, and the data 1 may be a bitstream or a symbol. For example, the first processing module 410 may perform one or more of operations such as source encoding, channel encoding, modulation, and multiple-input multiple-output (multiple-input multiple-output, MIMO) precoding on the data 1, or perform an operation equivalent to one or more of the foregoing operations. The third processing module 430 may be disposed at a receiving end. For example, the third processing module 430 may perform one or more of operations such as demodulation, channel decoding, and source decoding on the obtained data 3, or perform an operation equivalent to one or more of the foregoing operations, to obtain the data 4, where the data 4 may be a bitstream or a symbol obtained by restoring the data 1.

The first processing module 410 and/or the third processing module 430 may be implemented via a neural network model. Optionally, the first processing module 410 and/or the third processing module 430 may be configured through offline pre-training by using massive environment data (such as channel data), and training may not be performed anymore during actual use or inference.

The first interface 440 defines a procedure and/or signaling of interaction between the first processing module 410 and the second processing module 420. The second interface 450 defines a procedure and/or signaling of interaction between the second processing module 420 and the third processing module 430. The first interface 440 and/or the second interface 450 may be logical interfaces, or may be physical interfaces.

The second processing module 420 may also be referred to as a self-adaptive (self-adaptive) module. In a communication process, adjustment may be performed based on the environment data. The foregoing "adjustment" may be implemented through neural network training, or may be implemented by solving an analytical expression.

In the foregoing communication architecture, the first processing module 410 and the third processing module 430 may be adjusted by using offline training, and the second processing module 420 may be adjusted based on a change of an actual environment. In this way, adaptation to the change of the environment can be implemented with low complexity, and effective data receiving and sending can be implemented.

The first processing module and the third processing module are obtained through the offline training by using the massive environment data. A communication device may prestore one or more first processing modules and/or one or more third processing modules. Optionally, the one or more first processing modules and/or the one or more third processing modules may be downloaded from a model server, or may be provided by a third party. During actual use, the communication device may select the first processing module or the third processing module based on a computing capability, a storage capability, power consumption, and a task type of the communication device. The second processing module is a module that is locally set in the communication device and that can be adjusted based on real-time environment data. As a communication environment changes, an input/output parameter, a model parameter, or the like of the second processing module may change. This may cause mismatch between the first processing module and the second processing module, or mismatch between the third processing module and the second processing module. Therefore, when selecting the first processing module/third processing module and the second processing module, the communication device needs to consider adaptation between the first processing module/third processing module and the second processing module. In addition, communication devices at the transmitting end and the receiving end may respectively select the first processing module and the third processing module to jointly implement data receiving and sending, and the adaptation is also needed for selection of the first processing module and selection of the third processing module, to implement effective communication.

For the foregoing problem, an embodiment of this application provides a registration procedure. A first processing module of a communication device on a transmitting side may adapt to a second processing module inside the communication device via the registration procedure, or may adapt to a third processing module at the receiving end by performing registration with the second processing module. The second processing module may be adjusted based on an actual transmission environment. This enables each processing module to complete data processing, adapt to the changing communication environment, and implement effective data receiving and sending.

In a possible implementation, a procedure and/or signaling of interaction between a processing entity and a self-adaptive entity may be defined through an interface between the processing entity and the self-adaptive entity, for example, the foregoing first interface and second interface. The interaction procedure may include a registration process, a data transmission process, and the like. Parameters related to the signaling may include identification information, a data type, data precision, an input dimension, an output dimension, and the like transmitted between the processing entity and the self-adaptive entity.

Values of the parameters related to the signaling defined by the first interface and the second interface may be predefined in a standard, or may be semi-statically configured or dynamically configured. In a possible implementation, the identification information may be related to a task type of a specific implementation. Optionally, the task type may be indicated by using radio resource control (radio resource control, RRC) signaling. For example, a field of the task type or a task identifier is added to the RRC. In a possible implementation, the data type and the data precision may be related to a performance requirement of a task. Optionally, the performance requirement of the task may be indicated by using the RRC signaling. For example, a field of the performance requirement is added to the RRC. In a possible implementation, the input dimension and the output dimension may be related to an actual transmission resource, an actual transmission policy, and the like, where the transmission resource or the transmission policy may be indicated by using downlink control information (downlink control information, DCI) signaling. The transmission policy may be a modulation and coding scheme (modulation and coding scheme, MCS). For example, parameters such as a quantity of information bits, a quantity of encoded bits, and a quantity of modulated modulation symbols are determined based on the transmission resource and an MCS level, and these parameters are used to determine the input dimension and/or the output dimension.

As shown in FIG. 5, an embodiment of this application provides a communication method 500. The method is applicable to a transmitting end, and relates to a first control entity, a first processing entity, and a second entity. The first control entity is configured to control or manage the first processing entity, the second entity, and interaction between the first processing entity and the second entity. The first processing entity and the second entity respectively correspond to the first processing module 410 and the second processing module 420 in the communication architecture shown in FIG. 4. A model corresponding to the first processing entity is obtained through offline training, and a model corresponding to the second entity may be adjusted based on environment information. The first control entity, the first processing entity, and the second entity may be physically disposed on a same communication device or different communication devices. The communication device may be the foregoing terminal device or access network device.

The following describes specific content of the communication method 500.

S500 (optional step): The first control entity sends a first registration indication to the first processing entity, and correspondingly, the first processing entity receives the registration indication, where the registration indication includes identification information of the second entity.

In a possible implementation, the first control entity selects a target processing entity, namely, the first processing entity, from one or more processing entities, selects a target self-adaptive entity, namely, the second entity, from one or more self-adaptive entities, and sends the registration indication including the identification information of the second entity to the first processing entity.

Optionally, the first control entity selects the target processing entity and the target self-adaptive entity based on a task type. The task type may correspond to one or more of the following: quantization, source encoding, channel encoding, modulation, and MIMO precoding.

In a possible implementation, the first control entity is a protocol layer entity above a physical layer, and may also be referred to as a higher layer entity. For example, the first control entity is a media access control (media access control, MAC) layer entity, and the registration indication is MAC layer signaling.

S501: The first processing entity sends a first registration request to the second entity, and correspondingly, the second entity receives the first registration request, where the first registration request includes a first identifier.

In a possible implementation, the first processing entity sends the first registration request to the second entity based on the first registration indication received in S500.

In another possible implementation, the first processing entity selects the second entity based on a task type corresponding to the first processing entity, and sends the first registration request to the second entity.

Specifically, the first identifier indicates one or more of the following information of the first processing entity: model information or data information.

The model information may be referred to as a model description, and may include one or more of the following: a model purpose, a model type, a model scale, model precision, or model performance.

The model purpose indicates the task type corresponding to the first processing entity. For example, the model purpose includes one or more of the following: the quantization, the source encoding, the channel encoding, the modulation, and the MIMO precoding. The model type indicates a type of an AI model used by the first processing entity. The model type may be indicated in a level-based manner. For example, the model type includes a category and a subcategory. For example, the category may include a fully connected neural network (fully connected network, FCN), a convolutional neural network (convolutional neural network, CNN), a recurrent neural network (recurrent neural network, RNN), a transformer, or the like. A subcategory of the CNN may include a space utilization-based CNN, a depth-based CNN, a multipath CNN, an attention mechanism-based CNN, and the like. A subcategory of the RNN may include a gated recurrent unit (GRU, gated recurrent unit), long short-term memory (LSTM, long short-term memory), and the like. The model scale indicates a size of a model. When the model is a neural network, the model scale may include a quantity of one or more parameters of the following: a neural network layer, neurons at each layer, a weight, and a bias. The model precision indicates precision used by a model parameter. The module precision may include a binary type, an integer type, a floating point type, or the like, where the floating point type may further include float16, float32, and the like. The model performance indicates inference performance of a model. The inference performance of the model may be represented by accuracy of inference performed by the model on a reference data set.

The data information may be referred to as a data description. The data information may include one or more of the following: a data type, a data dimension, and data precision.

The data type indicates a type of data that can be processed by a model. The data type may include a bit, an integer, a real number, a complex number, and the like. The data dimension indicates an input dimension and/or an output dimension of a model. The data dimension may include a quantity of elements in an input data vector or a quantity of elements in an output data vector. The data precision indicates precision of data that can be processed by a model. The data precision may include a binary type, an integer type, a floating point type, or the like, where the floating point type may further include float16, float32, and the like.

S502: The second entity sends a first registration response to the first processing entity, and correspondingly, the first processing entity receives the first registration response, where the first registration response includes an input parameter of the second entity.

Specifically, the second entity determines, based on the first identifier in the received first registration request, whether the model information and/or the data information of the first processing entity meet/meets a requirement of the second entity. When determining that the model information and/or the data information of the first processing entity meet/meets the requirement of the second entity, the second entity sends the first registration response to the first processing entity.

Alternatively, when determining that the model information and/or the data information of the first processing entity do/does not meet the requirement of the second entity, the second entity may feed back a registration failure indication to the first processing entity, and optionally, the first processing entity reports the registration failure indication to the first control entity.

Alternatively, when determining that the model information and/or the data information of the first processing entity do/does not meet the requirement of the second entity, the second entity may not feed back a registration failure indication, and implicitly indicate a registration failure. When sending the first registration request, the first processing entity starts first registration response timing. If the first registration response is received before the timing expires, the timing is reset. If the timing expires, a first registration response timeout indication is sent to the first control entity.

In a possible implementation, the input parameter of the second entity includes one or more of the following content of input data of the second entity: a type, a dimension, or precision.

S503 (not separately shown in the figure): The first processing entity sends a first response acknowledgment based on the received first registration response, where the first response acknowledgment indicates whether an output parameter of the first processing entity matches the input parameter of the second entity.

The output parameter of the first processing entity includes one or more of the following content of output data of the first processing entity: a type, a dimension, or precision.

Specifically, before sending the first response acknowledgment, the first processing entity determines whether the output parameter of the first processing entity matches the input parameter of the second entity. For example, whether the type of the output data of the first processing entity matches the type of the input data of the second entity, whether the dimension of the output data of the first processing entity matches the dimension of the input data of the second entity, and/or whether the precision of the output data of the first processing entity matches the precision of the input data of the second entity.

When determining that the output parameter of the first processing entity successfully matches the input parameter of the second entity, the first processing entity sends the first response acknowledgment to the second entity (S503a). If the matching fails, the first processing entity sends the first response acknowledgment to the first control entity (S503b).

S503a: The first processing entity sends the first response acknowledgment to the second entity, where the first response acknowledgment indicates that the output parameter of the first processing entity successfully matches the input parameter of the second entity, and correspondingly, the second entity receives the first response acknowledgment.

In a possible implementation, after determining that the output parameter of the first processing entity successfully matches the input parameter of the second entity, the first processing entity performs first processing on first input data to obtain first output data, and transmits the first output data to the second entity through a first interface.

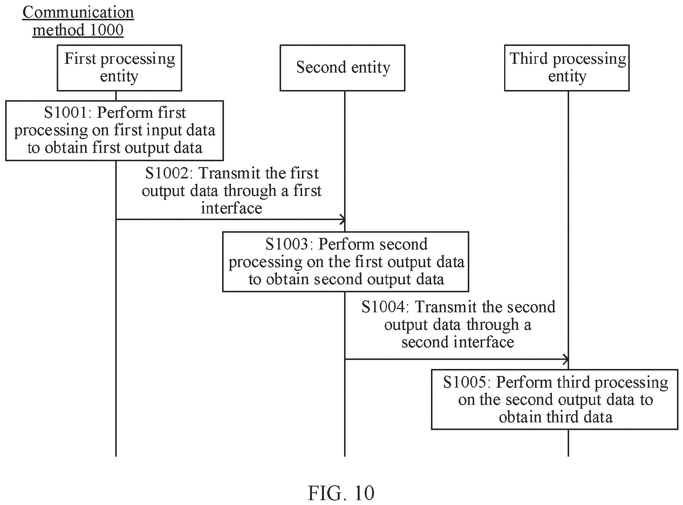

For details of data processing and data transmission processes of the first processing entity, the second entity, and a third processing entity, refer to the following related descriptions in FIG. 10.

S503b: The first processing entity sends the first response acknowledgment to the first control entity, where the first response acknowledgment indicates that the output parameter of the first processing entity fails to match the input parameter of the second entity, and correspondingly, the first control entity receives the first response acknowledgment.

Optionally, when determining that the output parameter of the first processing entity fails to match the input parameter of the second entity, the first processing entity may feed back a parameter matching failure indication to the second entity.

Alternatively, after determining that the output parameter of the first processing entity fails to match the input parameter of the second entity, the first processing entity may not feed back a parameter matching failure indication. When sending the first registration response, the second entity starts first response acknowledgment timing. If the first response acknowledgment is received before the timing expires, the timing is reset. If the timing expires, a first response acknowledgment timeout indication is sent to the first control entity. The second entity learns of a parameter matching failure in an implicit manner, so that signaling overheads can be reduced.

A parameter of the model corresponding to the first processing entity is obtained through the offline training, and a parameter of the model corresponding to the second entity may be adjusted based on the environment information. In an actual communication process, the first processing entity does not need to retrain the model of the first processing entity, but performs registration with an appropriate second entity (where the model information and/or the data information are/is matched, and the input parameter matches the output parameter) via the registration procedure shown in FIG. 5, to perform data processing and transmission. According to the method, adaptation to a change of an actual environment can be implemented with low complexity, and effective data receiving and sending can be implemented.

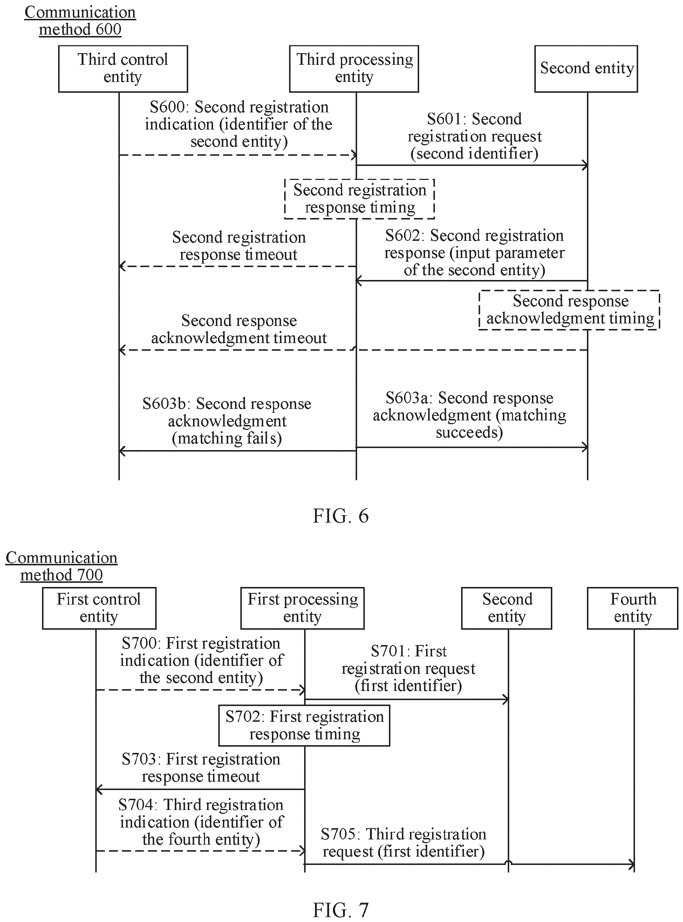

As shown in FIG. 6, an embodiment of this application provides a communication method 600. The method is applicable to a receiving end, and relates to a third control entity, a third processing entity, and a second entity. The third control entity is configured to control or manage the third processing entity, the second entity, and interaction between the third processing entity and the second entity. The third processing entity and the second entity respectively correspond to the third processing module 430 and the second processing module 420 in the communication architecture shown in FIG. 4. A model corresponding to the third processing entity is obtained through offline training, and a model corresponding to the second entity may be adjusted based on environment information. The third control entity, the third processing entity, and the second entity may be physically disposed on a same communication device or different communication devices. The communication device may be the foregoing terminal device or access network device.

The following describes specific content of the communication method 600.

S600 (optional step): The third control entity sends a second registration indication to the third processing entity, and correspondingly, the third processing entity receives the second registration indication, where the second registration indication includes identification information of the second entity.

In a possible implementation, the third control entity selects the third processing entity from one or more processing entities, selects the second entity from one or more self-adaptive entities, and sends the registration indication including the identification information of the second entity to the third processing entity.

Optionally, the third control entity selects the third processing entity and the second entity based on a task type. The task type may correspond to one or more of the following:

demodulation, channel decoding, and source decoding.

In a possible implementation, the third control entity is a protocol layer entity above a physical layer, and may also be referred to as a higher layer entity. For example, the third control entity is a MAC layer entity, and the registration indication is MAC layer signaling.

When a first processing entity and the third processing entity jointly implement data receiving and sending, the third control entity interacts with a first control entity via an interaction mechanism of a protocol layer corresponding to the third control entity (for example, a MAC layer protocol), to ensure that the third processing entity and the first processing entity are registered with a same second entity.

S601: The third processing entity sends a second registration request to the second entity, and correspondingly, the second entity receives the second registration request, where the second registration request includes a first identifier.

In a possible implementation, the third processing entity sends the second registration request to the second entity based on the second registration indication received in S600.

In another possible implementation, the third processing entity selects the second entity based on a task type corresponding to the third processing entity, and sends the second registration request to the second entity.

Specifically, the first identifier indicates one or more of model information or data information of the third processing entity.

The model information may be referred to as a model description, and may include one or more of the following: a model purpose, a model type, a model scale, model precision, or model performance.

The model purpose indicates the task type corresponding to the third processing entity. For example, the model purpose includes one or more of the demodulation, the channel decoding, and the source decoding. For other model information, refer to the related descriptions in S501. Details are not described herein again.

The data information may be referred to as a data description. The data information may include one or more of the following: a data type, a data dimension, and data precision.

The data type indicates a type of data that can be processed by a model. The data dimension indicates an input dimension and/or an output dimension of a model. The data dimension may include a quantity of elements in an input data vector or a quantity of elements in an output data vector. For other description parameters related to the data information, refer to the related descriptions in S501. Details are not described herein again.

S602: The second entity sends a second registration response to the third processing entity, and correspondingly, the third processing entity receives the second registration response, where the second registration response includes an output parameter of the second entity.

In a possible implementation, the output parameter of the second entity includes one or more of a type, a dimension, or precision of output data of the second entity.

For other aspects of sending the second registration response to the third processing entity by the second entity, refer to the related descriptions of sending the first registration response to the first processing entity by the second entity in S502. Details are not described herein again.

Optionally, when determining that the model information and/or the data information of the third processing entity do/does not meet a requirement of the second entity, the second entity may feed back a registration failure indication to the third processing entity, and optionally, the third processing entity reports the registration failure indication to the third control entity.

Alternatively, when determining that the model information and/or the data information of the third processing entity do/does not meet a requirement of the second entity, the second entity may not feed back a registration failure indication, and implicitly indicate a registration failure. When sending the second registration request, the third processing entity starts second registration response timing. If the second registration response is received before the timing expires, the timing is reset. If the timing expires, a second registration response timeout indication is sent to the third control entity.

S603 (not separately shown in the figure): The third processing entity sends a second response acknowledgment based on the received second registration response, where the second response acknowledgment indicates whether an input parameter of the third processing entity matches an output parameter of the second entity.

The input parameter of the third processing entity includes one or more of a type, a dimension, or precision of input data of the third processing entity.

Specifically, before sending the second response acknowledgment, the third processing entity determines whether the input parameter of the third processing entity matches the output parameter of the second entity. For example, whether the type of the input data of the third processing entity matches the type of the output data of the second entity, whether the dimension of the input data of the third processing entity matches the dimension of the output data of the second entity, and/or whether the precision of the input data of the third processing entity matches the precision of the output data of the second entity.

When determining that the input parameter of the third processing entity successfully matches the output parameter of the second entity, the third processing entity sends the second response acknowledgment to the second entity (S603a). If the matching fails, the third processing entity sends the second response acknowledgment to the third control entity (S603b).

S603a: The third processing entity sends the second response acknowledgment to the second entity, where the second response acknowledgment indicates that the input parameter of the third processing entity successfully matches the output parameter of the second entity, and correspondingly, the second entity receives the second response acknowledgment.

In a possible implementation, after determining that the input parameter of the third processing entity successfully matches the output parameter of the second entity, the third processing entity receives, through a second interface, second output data transmitted by the second entity, and performs second processing on the second output data to obtain third data. For specific content, refer to the following related descriptions in FIG. 10.

S603b: The third processing entity sends the second response acknowledgment to the third control entity, where the second response acknowledgment indicates that the input parameter of the third processing entity fails to match the output parameter of the second entity, and correspondingly, the third control entity receives the second response acknowledgment.

Optionally, when determining that the input parameter of the third processing entity fails to match the output parameter of the second entity, the third processing entity may feed back a parameter matching failure indication to the second entity.

Alternatively, when determining that the input parameter of the third processing entity fails to match the output parameter of the second entity, the third processing entity may not feed back a parameter matching failure indication. When sending the second registration response, the second entity starts second response acknowledgment timing. If the second response acknowledgment is received before the timing expires, the timing is reset. If the timing expires, a second response acknowledgment timeout indication is sent to the third control entity. The second entity learns of a parameter matching failure in an implicit manner, so that signaling overheads can be reduced.

The model corresponding to the third processing entity is obtained through the offline training, and the model corresponding to the second entity may be adjusted based on the environment information. In an actual communication process, the third processing entity does not need to retrain the model of the third processing entity, but performs registration with an appropriate second entity (where the model information and/or the data information are/is matched, and the input parameter matches the output parameter) via the registration procedure shown in FIG. 6, to perform data processing and transmission. According to the method, adaptation to a change of an actual environment can be implemented with low complexity, and effective data receiving and sending can be implemented.

In the communication method 500 and the communication method 600, three steps related to a registration process: the registration request, the registration response, and the response acknowledgment each may cause a registration failure. For example, registration response timeout, response acknowledgment timeout, or mismatch of an input parameter and an output parameter between two entities may cause a registration failure of a processing entity with the second entity. For a failure in any registration phase, the registration may be implemented by selecting a new first processing entity/third processing entity to initiate a registration procedure to the second entity, or may be implemented by initiating a new registration procedure to a new second entity by the first processing entity/third processing entity. FIG. 7 to FIG. 9 describe several possible procedures after the registration failure according to embodiments of this application.

As shown in FIG. 7, an embodiment of this application provides a communication method 700. The method describes a processing method for a case in which a registration failure occurs after a first processing entity sends a registration request to a second entity. The communication method 700 is described by using an example in which the first processing entity is registered with the second entity, and is also applicable to a scenario in which a third processing entity is registered with the second entity. The method relates to a first control entity, the first processing entity, the second entity, and a fourth entity, where the fourth entity is similar to the second entity, and a model of the fourth entity may be modulated based on environment information.

The following describes specific content of the communication method 700.

S700: The first control entity sends a first registration indication to the first processing entity, and correspondingly, the first processing entity receives the registration indication, where the registration indication includes identification information of the second entity.

S701: The first processing entity sends a first registration request to the second entity, and correspondingly, the second entity receives the first registration request, where the first registration request includes a first identifier.

For specific content of S700 and S710, refer to S500 and S501. Details are not described herein again.

S702: When sending the first registration request, the first processing entity starts first registration response timing.

When a first registration response sent by the second entity is received before the first registration response timing expires, the timing is stopped or reset. Timing duration may be predefined.

When the first registration response timing expires, step S703 is performed.

S703: The first processing entity sends a first registration response timeout indication to the first control entity, and correspondingly, the first control entity receives the first registration response timeout indication.

S704: The first control entity sends a third registration indication to the first processing entity, and correspondingly, the first processing entity receives the third registration indication. The third registration indication includes identification information of the fourth entity.

Specifically, after receiving the first registration response timeout indication, the first control entity selects another entity, namely, the fourth entity, from one or more self-adaptive entities, and sends the third registration indication including identification information of the fourth entity to the first processing entity.

Optionally, the fourth entity may alternatively be an entity obtained by updating the second entity based on an output parameter of the first processing entity.

S705: The first processing entity sends a third registration request to the fourth entity, and correspondingly, the fourth entity receives the third registration request, where the third registration request includes the first identifier. For specific content of S705, refer to S501. Details are not described herein again.

In the method 700, after sending the first registration request, the first processing entity starts first registration response timing. If the timing expires, the first processing entity reports the timeout indication to the first control entity. The first control entity indicates another self-adaptive entity to the first processing entity, to avoid waiting for the first processing entity for a long period of time and improve efficiency.

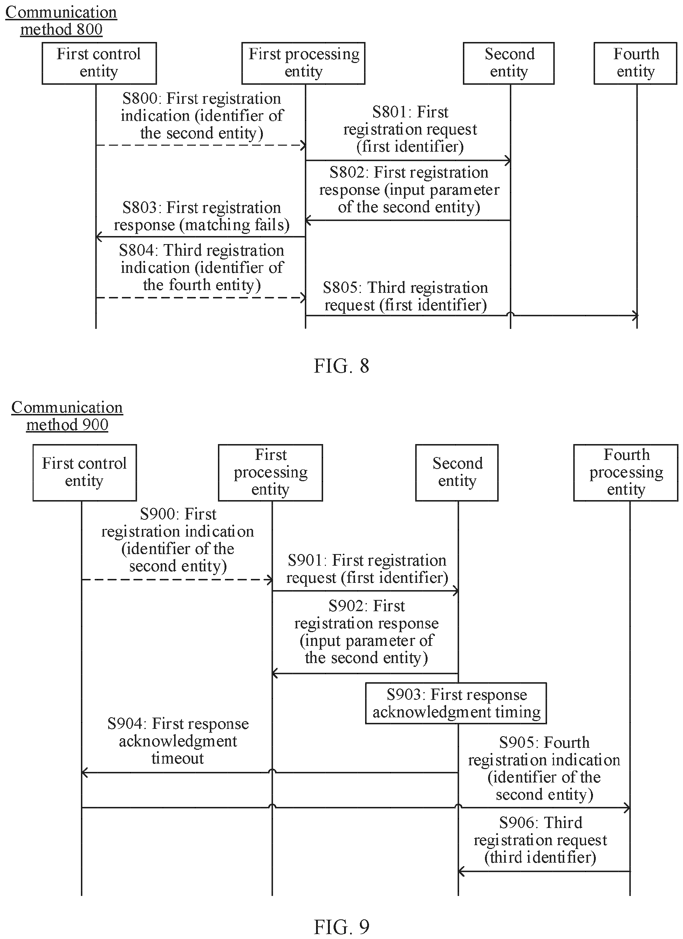

As shown in FIG. 8, an embodiment of this application provides a communication method 800. The method describes a processing method for a case in which a registration failure occurs after a second entity sends a registration response to a first processing entity, for example, a subsequent operation after a registration failure caused by mismatch between an input parameter of the second entity and an output parameter of the first processing entity. The communication method 800 is described by using an example in which the first processing entity is registered with the second entity, and is also applicable to a scenario in which a third processing entity is registered with the second entity. The method relates to a first control entity, the first processing entity, the second entity, and a fourth entity, where the fourth entity is similar to the second entity, and a model of the fourth entity may be modulated based on environment information.

S800 (optional step): The first control entity sends a first registration indication to the first processing entity, and correspondingly, the first processing entity receives the registration indication, where the registration indication includes identification information of the second entity.

S801: The first processing entity sends a first registration request to the second entity, and correspondingly, the second entity receives the first registration request, where the first registration request includes a first identifier.

S802: The second entity sends a first registration response to the first processing entity, and correspondingly, the first processing entity receives the first registration response, where the first registration response includes the input parameter of the second entity.

For specific descriptions of S800 to S802, refer to S500 to S502. Details are not described herein again.

S803: The first processing entity sends a first response acknowledgment to the first control entity, where the first response acknowledgment indicates that the output parameter of the first processing entity fails to match the input parameter of the second entity, and correspondingly, the first control entity receives the first response acknowledgment.

The output parameter of the first processing entity includes one or more of the following content of output data of the first processing entity: a type, a dimension, or precision. Specifically, before sending the first response acknowledgment, the first processing entity determines whether the output parameter of the first processing entity matches the input parameter of the second entity. For example, whether the type of the output data of the first processing entity matches a type of input data of the second entity, whether the dimension of the output data of the first processing entity matches a dimension of the input data of the second entity, and/or whether the precision of the output data of the first processing entity matches precision of the input data of the second entity.

When determining that the output parameter of the first processing entity fails to match the input parameter of the second entity, the first processing entity sends the first response acknowledgment to the first control entity.

S804: The first control entity sends a third registration indication to the first processing entity, and correspondingly, the first processing entity receives the third registration indication. The third registration indication includes identification information of the fourth entity.

Specifically, after receiving the first acknowledgment response indicating a matching failure, the first control entity selects another entity, namely, the fourth entity, from one or more self-adaptive entities, and sends the third registration indication including the identification information of the fourth entity to the first processing entity.

S805: The first processing entity sends a third registration request to the fourth entity, and correspondingly, the fourth entity receives the third registration request, where the third registration request includes the first identifier. For specific content of S705, refer to S501. Details are not described herein again.

In the method 800, when determining that the output parameter of the first processing entity fails to match an input parameter of a second entity indicated in the first registration response, the first processing entity sends, to the first control entity, the first acknowledgment response indicating the matching failure. The first control entity indicates, to the first processing entity, another self-adaptive entity with which the first processing entity can be registered, to avoid registering with the second entity for a plurality of times. Therefore, efficiency is improved.

As shown in FIG. 9, an embodiment of this application provides a communication method 900. The method describes a subsequent operation after a registration failure caused by timeout of first registration response timing. The communication method 900 is described by using an example in which a first processing entity is registered with a second entity, and is also applicable to a scenario in which a third processing entity is registered with the second entity. The method relates to a first control entity, the first processing entity, the second entity, and a fourth processing entity, where the fourth processing entity is similar to the first processing entity, and a model corresponding to the fourth processing entity is obtained through offline training.

S900 (optional step): The first control entity sends a first registration indication to the first processing entity, and correspondingly, the first processing entity receives the registration indication, where the registration indication includes identification information of the second entity.

S901: The first processing entity sends a first registration request to the second entity, and correspondingly, the second entity receives the first registration request, where the first registration request includes a first identifier.

S902: The second entity sends a first registration response to the first processing entity, and correspondingly, the first processing entity receives the first registration response, where the first registration response includes an input parameter of the second entity.

For specific descriptions of S900 to S902, refer to S500 to S502. Details are not described herein again.

S903: When sending the first registration request, the second entity starts first response acknowledgment timing.

When a first response acknowledgment sent by the second entity is received before the first response acknowledgment timing expires, the timing is stopped or reset. Timing duration may be predefined.

When the first response acknowledgment timing expires, step S703 is performed.

S904: The second entity sends a first response acknowledgment timeout indication to the first control entity, and correspondingly, the first control entity receives the first response acknowledgment timeout indication.

S905: The first control entity sends a fourth registration indication to the fourth processing entity, and correspondingly, the fourth processing entity receives the fourth registration indication, where the fourth registration indication includes identification information of the second entity.

Specifically, after receiving the first response acknowledgment timeout indication, the first control entity selects, from one or more processing entities, a target processing entity different from the first processing entity, namely, the fourth processing entity, and sends the fourth registration indication including the identifier of the second entity to the fourth processing entity.

For specific content of selecting the target processing entity from the one or more processing entities by the first control entity, refer to related descriptions in S500. Details are not described herein again.

S906: The fourth processing entity sends a third registration request to the second entity, and correspondingly, the second entity receives the third registration request, where the third registration request includes a third identifier.

Specifically, the fourth processing entity sends the third registration request to the second entity based on the received fourth registration indication. The third registration request includes the third identifier. The third identifier indicates one or more of model information or data information of the fourth processing entity. For specific content, refer to related descriptions of the first identifier in S501. Details are not described herein again.

Subsequent steps of the method 900 are the same as the steps after the second entity receives the first registration request of the first processing entity in the method 500. Details are not described herein again. In the method 900, when the first processing entity does not feed back the first response acknowledgment to the second entity before the first response acknowledgment timing expires, the second entity reports the first response acknowledgment timeout indication to the first control entity. The first control entity selects another target processing entity for registration with the second entity, to avoid a case in which the first processing entity fails to be registered with the second entity for a plurality of times. Therefore, efficiency is improved.

After target processing entities at a transmitting end and a receiving end are registered with a target self-adaptive entity via any one of the foregoing possible methods described in FIG. 5 to FIG. 9, the target processing entities may perform data processing and data receiving and sending. As shown in FIG. 10, an embodiment of this application provides a communication method 1000. The method is described by using a first processing entity, a second entity, and a third processing entity as an example, where the first processing entity and the second entity may be disposed at a transmitting end, and the third processing entity may be disposed at a receiving end. An output parameter of the first processing entity matches an input parameter of the second entity, and an output parameter of the second entity matches an input parameter of the third processing entity. The first processing entity performs first processing on data, and the third processing entity performs third processing on the data, where the third processing may be an inverse operation of the first processing.

The following describes specific content of the communication method 1000.

S1001: The first processing entity performs the first processing on first input data to obtain first output data.

In a possible implementation, the first processing entity implements encoding and modulation functions. The first processing includes channel encoding and modulation, or equivalent processing of channel encoding and modulation, the first input data is a bitstream obtained through source encoding, and the first output data is a modulated symbol sequence.

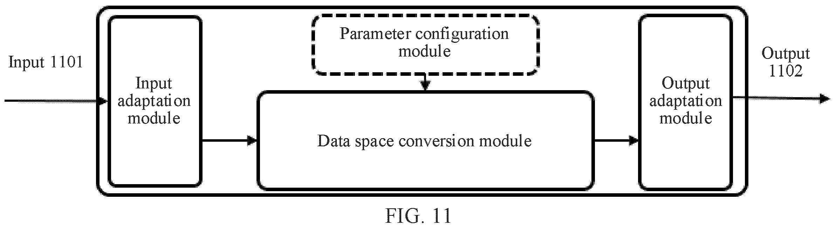

For example, a structure of the first processing entity is shown in FIG. 11, and includes an input adaptation module, a data space conversion module, an output adaptation module, and an optional parameter configuration module. The first input data corresponds to an input 1101 in the figure, and may be a bitstream obtained through source encoding. The input adaptation module is configured to perform feature embedding and extraction on the input 1101, so that the input 1101 adapts to an input dimension of the data space conversion module. An output of the input adaptation module is a bit group, and a data amount of a bit in each group corresponds to the input dimension of the data space conversion module. The data space conversion module is configured to perform subspace conversion on the output of the input adaptation module to obtain a modulated symbol sequence, to implement the encoding and modulation functions. A parameter of the data space conversion module (including the input dimension of the data space conversion module) may be determined based on one or more of the following: a channel encoding code rate, a modulation order, and a quantity of transmission resources. Optionally, the parameter configuration module is configured to configure the parameter of the data space conversion module based on one or more of the following: the channel encoding code rate, the modulation order, and the quantity of transmission resources. The output adaptation module is configured to adapt an output of the data space conversion module to a specific data type, a specific data dimension, and specific data precision to obtain the first output data, namely, an output 1102.

For example, the input configuration module is configured to adapt a dimension of the first input data to the input dimension of the data space conversion module. The data space conversion module is configured to perform the first processing on the first input data to obtain first intermediate output data. The output adaptation module is configured to perform dimension transformation on the first intermediate output data to obtain the first output data. The dimension transformation on the first intermediate output data may include a change from a low dimension to a high dimension. For example, dimension increasing is implemented by replicating the first intermediate output data, to cope with a case in which a channel condition is poor.

In a possible implementation, the first processing entity implements quantization, source encoding, channel encoding, and modulation functions. The first processing includes quantization, source encoding, channel encoding, and modulation, or includes equivalent processing of quantization, source encoding, channel encoding, and modulation, the first input data is a symbol sequence, and the first output data is a modulated symbol sequence. Optionally, the first input data is sensing data.

For example, a structure of the first processing entity is shown in FIG. 11, and includes an input adaptation module, a data space conversion module, an output adaptation module, and an optional parameter configuration module. The first input data corresponds to an input 1101 in the figure, and may be a symbol sequence. The input adaptation module is configured to perform feature embedding and extraction on the input 1101, so that the input 1101 adapts to an input dimension of the data space conversion module. An output of the input adaptation module is a symbol group, and a quantity of symbols in each group corresponds to the input dimension of the data space conversion module. The data space conversion module is configured to perform subspace conversion on the output of the input adaptation module to obtain a modulated symbol, to implement the quantization, source encoding, channel encoding, and modulation functions. A parameter of the data space conversion module (including the input dimension of the data space conversion module) may be determined based on one or more of a quantization level, a source encoding scheme, a channel encoding code rate, a modulation order, and a quantity of transmission resources. Optionally, the parameter configuration module is configured to configure the parameter of the data space conversion module based on one or more of the following: the channel encoding code rate, the modulation order, and the quantity of transmission resources. The output adaptation module is configured to adapt an output of the data space conversion module to a specific data type, a specific data dimension, and specific data precision to obtain the first output data, namely, an output 1102.

In a possible implementation, the data space conversion module is a neural network model, and the first processing entity is obtained through offline training.

S1002: The first processing entity transmits the first output data through a first interface, and correspondingly, the second entity receives the first output data through the first interface.

S1003: The second entity performs second processing on the first output data to obtain second output data.

In a possible implementation, the second processing includes mapping the first output data to the second output data. The mapping from the first output data to the second output data is determined based on a real-time environment parameter.

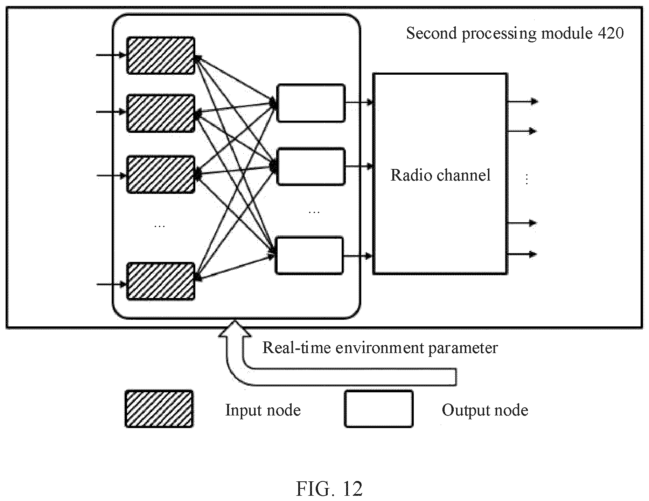

For example, the second entity corresponds to the second processing module in FIG. 4. A structure of the second processing module is shown in FIG. 12, and includes an input node, an output node, and a radio channel. A quantity of input nodes corresponds to an input dimension of the second entity, and a quantity of output nodes corresponds to an output dimension of the second entity.

A possible type of mapping between the input node and the output node may be expressed as:

$$y_i = \sum_{j=1}^{J} w_{ji} x_j$$

$x_j$ is a $j^{th}$ input value, where $j \in J$, and $J$ represents the quantity of input nodes; $y_i$ is an $i^{th}$ output value, where $i \in I$, and $I$ represents the quantity of output nodes; and $w_{ji}$ is a weight between the $j^{th}$ input value and the $i^{th}$ output value. $w_{ji}$ may be adjusted based on the real-time environment parameter, for example, may be updated by using a message passing algorithm (message passing algorithm, MPA), belief propagation (belief propagation, BP), a minimum mean square error (minimum mean square error, MMSE), a weighted minimum mean square error (weighted MMSE, WMMSE), maximum likelihood (maximum likelihood, ML), maximum a posteriori (maximum a posteriori, MAP), or another algorithm. The foregoing mapping expression is an example of a basic expression. During actual application, the foregoing mapping expression may be transformed or the like. This is not limited in this application.

S1004: The second entity transmits the second output data to the third processing entity through a second interface, and correspondingly, the third processing entity receives the second output data.

S1005: The third processing entity performs third processing on the second output data to obtain third data.

In a possible implementation, the first processing entity implements the encoding and modulation functions, and correspondingly, the third processing entity implements demodulation and channel decoding functions. The third processing may be understood as an inverse process of the first processing. An input of the third processing entity, namely, the second output data, is a symbol sequence, and an output of the third processing entity, namely, the third data, is a bit sequence.

For example, a structure of the third processing entity is shown in FIG. 11, and includes an input adaptation module, a data space conversion module, an output adaptation module, and an optional parameter configuration module. The second output data corresponds to an input 1101 in the figure, and may be a modulated symbol sequence. The input adaptation module is configured to perform feature embedding and extraction on the input 1101, so that the input 1101 adapts to an input dimension of the data space conversion module. An output of the input adaptation module is a symbol group, and a quantity of symbols in each group corresponds to the input dimension of the data space conversion module. The data space conversion module is configured to perform subspace conversion on the output of the input adaptation module to obtain a modulated symbol sequence, to implement the demodulation and channel decoding functions. A parameter of the data space conversion module (including the input dimension of the data space conversion module) may be determined based on one or more of the following: a channel encoding code rate, a modulation order, and a quantity of transmission resources. Optionally, the parameter configuration module is configured to configure the parameter of the data space conversion module based on one or more of the following: the channel encoding code rate, the modulation order, and the quantity of transmission resources. The output adaptation module is configured to adapt an output of the data space conversion module to a subsequent module to obtain an output 1102.

In a possible implementation, the first processing entity implements the quantization, source encoding, channel encoding, and modulation functions, and correspondingly, the third processing entity implements demodulation, channel decoding, and source decoding functions. An input of the third processing entity, namely, the second output data, is a modulated symbol sequence, and an output of the third processing entity, namely, the third data, is a symbol sequence.

For example, a structure of the third processing entity is shown in FIG. 11, and includes an input adaptation module, a data space conversion module, an output adaptation module, and an optional parameter configuration module. The first input data corresponds to an input 1101 in the figure, and may be a modulated symbol sequence. The input adaptation module is configured to perform feature embedding and extraction on the input 1101, so that the input 1101 adapts to an input dimension of the data space conversion module. An output of the input adaptation module is a symbol group, and a quantity of symbols in each group corresponds to the input dimension of the data space conversion module. The data space conversion module is configured to perform subspace conversion on the output of the input adaptation module to obtain a modulated symbol, to implement the quantization, source encoding, channel encoding, and modulation functions. A parameter of the data space conversion module (including the input dimension of the data space conversion module) may be determined based on one or more of a quantization level, a source encoding scheme, a channel encoding code rate, a modulation order, and a quantity of transmission resources. Optionally, the parameter configuration module is configured to configure the parameter of the data space conversion module based on one or more of the following: the channel encoding code rate, the modulation order, and the quantity of transmission resources. The output adaptation module is configured to adapt an output of the data space conversion module to a subsequent module to obtain an output 1102.

In a possible implementation, the data space conversion module is a neural network model, and the third processing entity is obtained through offline training.

In a possible implementation, the first input data is sensing data, and the third data is sensing data restored by the third processing entity. Optionally, a communication device corresponding to the third processing entity may further process sensing data to obtain a sensing result.

In the communication method 1000, data processing and data receiving and sending may be implemented via the first processing entity, the second entity, and the third processing entity that match each other. The first processing entity and the third processing entity may be obtained through the offline training, and the second entity may be adjusted based on the real-time environment parameter. In this way, adaptation to a changing transmission environment can be implemented with low complexity, and effective data receiving and sending can be implemented.

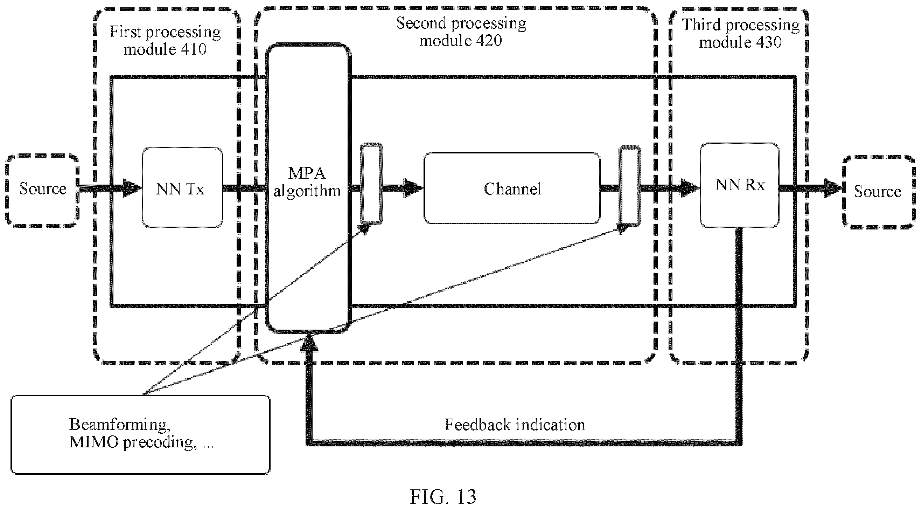

In this embodiment of this application, the first processing entity and the third processing entity may be implemented over a neural network, and the second entity may be implemented via a self-adaptive algorithm or a self-adaptive iteration algorithm. These algorithms include but are not limited to the MPA, BP, MMSE, WMMSE, maximum likelihood ML, MAP, and other algorithms. FIG. 13 shows a specific example in which a method provided in an embodiment of this application is implemented by using a neural network and a self-adaptive iteration algorithm. A first processing module 410 corresponds to a first processing entity, a second processing module 420 corresponds to a second entity, and a third processing module 430 corresponds to a third processing entity.

The first processing module 410 includes a neural network model NN Tx, and the third processing module 430 includes a neural network model NN Rx. The NN Tx and the NN Rx may be implemented by using a self-encoder or a transformer, and are obtained by performing offline pre-training based on massive environment parameter samples or training samples generated through modeling based on a mathematical model.

The second processing module 420 includes an iteration algorithm module, a radio channel, and optional modules such as beamforming and MIMO precoding. The iteration operation module may perform online adjustment based on a real-time environment parameter.

In a possible implementation, the real-time environment parameter is determined based on a feedback indication of the third processing module. The feedback indication includes channel state information or a channel eigenvector, where the channel eigenvector is an eigenvalue vector extracted based on the channel state information. Optionally, the feedback indication further includes capability switch information, where the capability switch information is used to enable or disable the first processing module 410 and/or the second processing module 420.

In a possible implementation, the iteration algorithm module may be implemented via MPA, BP, MMSE, WMMSE, maximum likelihood ML, MAP, or another algorithm.

To implement functions in the methods provided in embodiments of this application, the first processing entity, the second entity, and the third processing entity each may include a hardware structure and/or a software module, and implement the foregoing functions in a form of a hardware structure, a software module, or a hardware structure plus a software module. Whether a function in the foregoing functions is performed by using the hardware structure, the software module, or the combination of the hardware structure and the software module depends on a specific application and design constraints of the technical solutions.

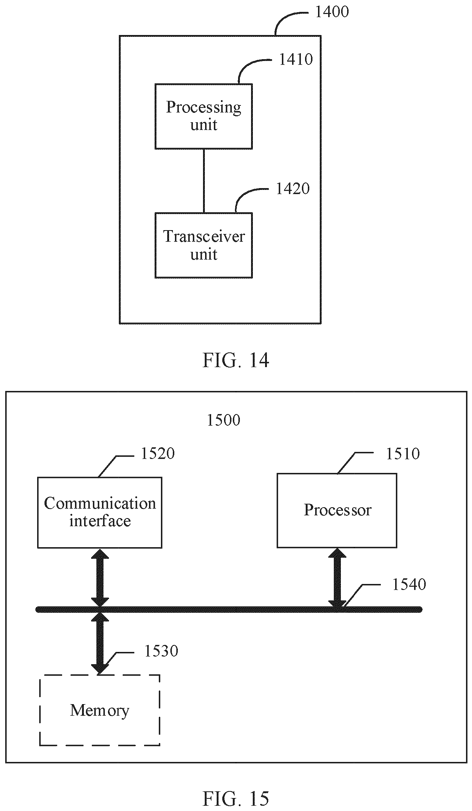

As shown in FIG. 14, an embodiment of this application provides a communication apparatus 1400. The communication apparatus 1400 may be a terminal or a network device, may be an apparatus in a terminal device or a network device, or may be an apparatus that can be used with a terminal device or a network device. In a possible implementation, the communication apparatus 1400 may include modules or units that one to one correspond to the methods/operations/steps/actions performed by the first processing entity, the second entity, and the third processing entity in the foregoing method embodiments. The unit may be a hardware circuit or software, or may be implemented by a hardware circuit in combination with software. In a possible implementation, the communication apparatus 1400 may include a processing unit 1410 and a transceiver unit 1420. The processing unit 1410 may be configured to invoke the transceiver unit 1420 to perform a receiving function and/or a sending function.

In a possible implementation, the communication apparatus 1400 is configured to perform an operation of the first processing entity. The transceiver unit 1420 is configured to send a first registration request to the second entity, where the first registration request includes a first identifier, the first identifier indicates one or more of model information or data information of the communication apparatus, and a model parameter of the second entity is adjusted based on a real-time environment parameter. The transceiver unit 1420 is further configured to receive a first registration response sent by the second entity, where the first registration response indicates an input parameter of the second entity. The transceiver unit 1420 is further configured to send a first response acknowledgment, where the first response acknowledgment indicates whether an output parameter of the first processing entity matches the input parameter of the second entity.

In a possible implementation, the communication apparatus 1400 is configured to perform an operation of the second entity. Specifically, the transceiver unit 1420 is configured to receive a first registration request sent by the first processing entity, where the first registration request includes a first identifier, the first identifier indicates one or more of the following information of the first processing entity: model information or data information, and a model parameter of the communication apparatus is adjusted based on a real-time environment parameter. The transceiver unit 1420 is configured to send a first registration response to the first processing entity, where the first registration response indicates an input parameter of the communication apparatus, and the input parameter of the communication apparatus is used to determine whether an output parameter of the first processing entity matches the input parameter of the communication apparatus.

In a possible implementation, the first processing entity and the second entity belong to a same communication apparatus. In other words, the communication apparatus 1400 may implement both the operation performed by the first processing entity and the operation performed by the second entity.

In a possible implementation, the communication apparatus 1400 is configured to perform an operation of the third processing entity. The transceiver unit 1420 is configured to send a second registration request to the second entity, where the second registration request includes a second identifier, the second identifier indicates one or more of model information or data information of the communication apparatus, and a model parameter of the second entity is adjusted based on a real-time environment parameter. The transceiver unit 1420 is further configured to receive a second registration response sent by the second entity, where the second registration response indicates an output parameter of the second entity. The transceiver unit 1420 is further configured to send a second response acknowledgment, where the second response acknowledgment indicates whether an input parameter of the communication apparatus matches the output parameter of the second entity.

In a possible implementation, the communication apparatus 1400 is configured to perform an operation of the second entity.

Functional modules or units in embodiments of this application may be integrated into one processor, each of the modules or units may exist alone physically, or at least two modules or units may be integrated into one module or unit. The integrated module or unit may be implemented in a form of hardware, or may be implemented in a form of a software functional module. In a possible implementation, the processing unit 1410 may be a processor, and the transceiver unit 1420 may be a transceiver.

Refer to FIG. 15. An embodiment of this application further provides a communication apparatus 1500. The communication apparatus 1500 is configured to implement a function of the first processing entity, the second entity, or the third processing entity in the foregoing method. The communication apparatus may be a terminal, a network device (a source access network device, a target access network device, or a computing management function), may be an apparatus (for example, a chip or a circuit) in a terminal or a network device, or may be an apparatus that can be used with a terminal or a network device. The communication apparatus 1500 includes at least one processor 1510, and the communication apparatus 1500 may further include a communi-

nication interface 1520. In this embodiment of this application, the communication interface may be a transceiver, a circuit, a bus, a module, or another type of communication interface, and is configured to communicate with another device by using a transmission medium. For example, the communication interface 1520 is used by an apparatus in the communication apparatus 1500 to communicate with another device.

The processor 1510 may perform a function performed by the processing unit 1410 in the communication apparatus 1400. The communication interface 1520 may be configured to perform a function performed by the transceiver unit 1420 in the communication apparatus 1400.

In a possible implementation, when the communication apparatus 1500 is configured to perform an operation performed by the first processing entity, the communication interface 1520 is configured to send a first registration request to the second entity, where the first registration request includes a first identifier, the first identifier indicates one or more of model information or data information of the communication apparatus, and a model parameter of the second entity is adjusted based on a real-time environment parameter. The communication interface 1520 is further configured to receive a first registration response sent by the second entity, where the first registration response indicates an input parameter of the second entity. The communication interface 1520 is further configured to send a first response acknowledgment, where the first response acknowledgment indicates whether an output parameter of the first processing entity matches the input parameter of the second entity.

In a possible implementation, when the communication apparatus 1500 is configured to perform an operation performed by the second entity, the communication interface 1520 is configured to receive a first registration request sent by the first processing entity, where the first registration request includes a first identifier, the first identifier indicates one or more of the following information of the first processing entity: model information or data information, and a model parameter of the communication apparatus is adjusted based on a real-time environment parameter. The communication interface 1520 is further configured to send a first registration response to the first processing entity, where the first registration response indicates an input parameter of the communication apparatus, and the input parameter of the communication apparatus is used to determine whether an output parameter of the first processing entity matches the input parameter of the communication apparatus.

In a possible implementation, when the communication apparatus 1500 is configured to perform an operation performed by the second entity, the communication interface 1520 is configured to receive a second registration request sent by the third processing entity, where the second registration request includes a second identifier, the second identifier indicates one or more of model information or data information of the third processing entity, and a model parameter of the communication apparatus is adjusted based on a real-time environment parameter. The communication interface 1520 is further configured to send a second registration response to the third processing entity, where the second registration response indicates an output parameter of the communication apparatus, and the output parameter of the communication apparatus is used to determine whether an input parameter of the third processing entity matches the output parameter of the second entity.

In a possible implementation, when the communication apparatus 1500 is configured to perform an operation performed by the third processing entity, the communication interface 1520 is configured to send a second registration request to the second entity, where the second registration request includes a second identifier, the second identifier indicates one or more of model information or data information of the communication apparatus, and a model parameter of the second entity is adjusted based on a real-time environment parameter. The communication interface 1520 is further configured to receive a second registration response sent by the second entity, where the second registration response indicates an output parameter of the second entity. The communication interface 1520 is further configured to send a second response acknowledgment, where the second response acknowledgment indicates whether an input parameter of the communication apparatus matches the output parameter of the second entity.

The communication apparatus 1500 may further include at least one memory 1530, configured to store program instructions and/or data. The memory 1530 is coupled to the processor 1510. Couplings in this embodiment of this application are indirect couplings or communication connections between apparatuses, units, or modules, may be in an electrical form, a mechanical from, or another form for information exchange between the apparatuses, the units, or the modules. The processor 1510 may cooperate with the memory 1530. The processor 1510 may execute a computer program or instructions stored in the memory 1530. In a possible implementation, at least one of the at least one memory may be integrated with the processor. In another possible implementation, the memory 1530 is located outside the communication apparatus 1500.

A specific connection medium between the communication interface 1520, the processor 1510, and the memory 1530 is not limited in this embodiment of this application. In this embodiment of this application, in FIG. 15, the memory 1530, the processor 1510, and the communication interface 1520 are connected to each other through a bus 1540. The bus is represented by a bold line in FIG. 15. A connection manner between other components is merely an example for description, and imposes no limitation. The bus may be divided into an address bus, a data bus, a control bus, and the like. For ease of representation, the bus is represented by using only one bold line in FIG. 15. However, it does not indicate that there is only one bus or only one type of bus.

In a possible implementation, the communication apparatus 1500 may be a chip system. In this embodiment of this application, the chip system may include a chip, or may include a chip and another discrete component.

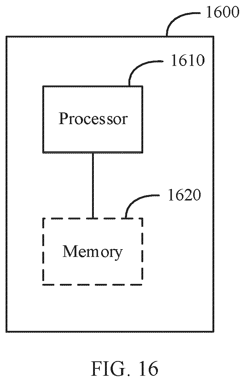

Refer to FIG. 16. An embodiment of this application further provides a communication apparatus 1600. The communication apparatus 1600 is configured to implement a function of the first processing entity, the second entity, or the third processing entity in the foregoing method. The communication apparatus may be a terminal or a network device, may be an apparatus (for example, a chip or a circuit) in a terminal or a network device, or may be an apparatus that can be used with a terminal or a network device. The communication apparatus includes a processor 1610. The processor is configured to implement some or all functions of the first communication apparatus, the second communication apparatus, or the terminal.

In a possible implementation, when the communication apparatus 1600 is configured to perform an operation performed by the first processing entity, the processor 1610 is configured to send a first registration request to the second entity, where the first registration request includes a first identifier, the first identifier indicates one or more of model information or data information of the communication apparatus, and a model parameter of the second entity is adjusted based on a real-time environment parameter. The processor 1610 is further configured to receive a first registration response sent by the second entity, where the first registration response indicates an input parameter of the second entity. The processor 1610 is further configured to send a first response acknowledgment, where the first response acknowledgment indicates whether an output parameter of the first processing entity matches the input parameter of the second entity.

In a possible implementation, when the communication apparatus 1600 is configured to perform an operation performed by the second entity, the processor 1610 is configured to receive a first registration request sent by the first processing entity, where the first registration request includes a first identifier, the first identifier indicates one or more of the following information of the first processing entity: model information or data information, and a model parameter of the communication apparatus is adjusted based on a real-time environment parameter. The processor 1610 is further configured to send a first registration response to the first processing entity, where the first registration response indicates an input parameter of the communication apparatus, and the input parameter of the communication apparatus is used to determine whether an output parameter of the first processing entity matches the input parameter of the communication apparatus.

In a possible implementation, when the communication apparatus 1600 is configured to perform an operation performed by the second entity, the processor 1610 is configured to receive a second registration request sent by the third processing entity, where the second registration request includes a second identifier, the second identifier indicates one or more of model information or data information of the third processing entity, and a model parameter of the communication apparatus is adjusted based on a real-time environment parameter. The processor 1610 is further configured to send a second registration response to the third processing entity, where the second registration response indicates an output parameter of the communication apparatus, and the output parameter of the communication apparatus is used to determine whether an input parameter of the third processing entity matches the output parameter of the second entity.

In a possible implementation, when the communication apparatus 1600 is configured to perform an operation performed by the third processing entity, the processor 1610 is configured to send a second registration request to the second entity, where the second registration request includes a second identifier, the second identifier indicates one or more of model information or data information of the communication apparatus, and a model parameter of the second entity is adjusted based on a real-time environment parameter. The processor 1610 is further configured to receive a second registration response sent by the second entity, where the second registration response indicates an output parameter of the second entity. The processor 1610 is further configured to send a second response acknowledgment, where the second response acknowledgment indicates whether an input parameter of the communication apparatus matches the output parameter of the second entity.

In a possible implementation, the processor 1610 executes instructions stored in a memory 1620, to implement the function implemented by the first processing entity, the second entity, or the third processing entity. Optionally, the communication apparatus further includes the memory 1620. Optionally, the processor 1610 and the memory 1620 are integrated together. Optionally, the memory 1620 is outside the communication apparatus 1600.

In a possible implementation, the processor 1610 may be a logic circuit, and the processor 1610 inputs/outputs a message or signaling through an input/output interface (not shown in the figure). The logic circuit may be a signal processor, a chip, or another integrated circuit that can implement the method in this application.

When the communication apparatus is a chip used in a terminal, the chip in the terminal implements a function of the terminal in the foregoing method embodiments. The chip in the terminal receives information from another module (for example, a radio frequency module or an antenna) in the terminal, where the information is sent by another terminal or a network device to the terminal. Alternatively, the chip in the terminal outputs information to another module (for example, a radio frequency module or an antenna) in the terminal, where the information is sent by the terminal to another terminal or a network device.

When the communication apparatus is a chip used in a network device, the chip in the network device implements a function of the network device in the foregoing method embodiments. The chip in the network device receives information from another module (for example, a radio frequency module or an antenna) in the network device, where the information is sent by a terminal or another network device to the network device. Alternatively, the chip in the network device outputs information to another module (for example, a radio frequency module or an antenna) in the network device, where the information is sent by the network device to a terminal or another network device.

In embodiments of this application, the processor (for example, the processor 1510, or the processor 1610) may be one or more central processing units (central processing units, CPUs). When the processor is one CPU, the CPU may be a single-core CPU, or may be a multi-core CPU. The processor may be a general-purpose processor, a digital signal processor, an application-specific integrated circuit, a field programmable gate array, another programmable logic device, a discrete gate, a transistor logic device, or a discrete hardware component, and may implement or execute the methods, steps, and logical block diagrams disclosed in embodiments of this application. The general-purpose processor may be a microprocessor, any conventional processor, or the like. The steps in the method disclosed with reference to embodiments of this application may be directly performed and completed by a hardware processor, or may be performed and completed by using a combination of hardware in the processor and a software module.

In embodiments of this application, the memory (for example, the memory 1530 or the memory 1620) may include but is not limited to a non-volatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a compact disc read-only memory (Compact Disc Read-Only Memory, CD-ROM). The memory is any other medium that can be used to carry or store a computer program in a form of instructions or a data structure and that is accessible by a computer, but is not limited thereto. The memory in embodiments of this application may alternatively be a circuit or any other apparatus that can implement a storage function, and is configured to store a computer program or instructions, and/or data.

An embodiment of this application further provides a computer-readable storage medium. The computer-readable storage medium stores a computer program or instructions. The computer program or instructions are executed by a computer (for example, a processor), to implement some or all steps of any method performed by any apparatus in embodiments of this application.

When the apparatus provided in this application is implemented in a form of a software functional unit and sold or used as an independent product, the apparatus may be stored in a computer-readable storage medium. The computer-readable storage medium may be any usable medium accessible by the computer, or a data storage device such as a server or a data center that integrates one or more usable media. The usable medium may be a magnetic medium (for example, a floppy disk, a hard disk, or a magnetic tape), an optical medium (for example, an optical disc), a semiconductor medium (for example, a solid-state disk), or the like.

An embodiment of this application further provides a computer program product including a computer program or a group of instructions. When the computer program product runs on a computer, some or all steps of any method in the foregoing aspects are performed.

All or some of the methods in the foregoing embodiments may be implemented by using software, hardware, firmware, or any combination thereof. When software is used to implement the embodiments, all or some of the embodiments may be implemented in a form of a computer program product. The computer may be a general-purpose computer, a dedicated computer, a computer network, or another programmable apparatus. The computer instructions may be stored in a computer-readable storage medium, or may be transmitted from one computer-readable storage medium to another computer-readable storage medium.

This application further provides a chip or a chip system. The chip may include a processor. The chip may further include a memory (or a storage module) and/or a transceiver (or a communication module), or the chip is coupled to a memory (or a storage module) and/or a transceiver (or a communication module). The transceiver (or the communication module) may be configured to support the chip in performing wired and/or wireless communication. The memory (or the storage module) may be configured to store a program or a group of instructions. The processor may invoke the program or the group of instructions to implement operations performed by the terminal or the network device in any one of the foregoing method embodiments or the possible implementations of the method embodiments. The chip system may include the chip, or may include the chip and another discrete device, such as the memory (or the storage module) and/or the transceiver (or the communication module).

Based on a same concept as the foregoing method embodiments, this application further provides a communication system. The communication system may include the foregoing first processing entity, second entity, and third processing entity. The communication system may be configured to implement operations performed by the first processing entity, the second entity, and the third processing entity in any one of the foregoing method embodiments or the possible implementations of the method embodiments. For example, the communication system may be of the structure shown in FIG. 2.

In the foregoing embodiments, the descriptions of each embodiment have a respective focus. For a part that is not described in detail in an embodiment, refer to related descriptions in other embodiments.

The foregoing descriptions are merely some specific implementations of this application, but are not intended to limit the protection scope of this application. Any person skilled in the art may make other changes or modifications to these embodiments within the technical scope disclosed in this application. The appended claims are intended to be construed as including foregoing method embodiments and the changes and modifications that fall within the scope of this application. Therefore, the protection scope of this application shall be subject to the protection scope of the claims.

## Claims

1. A communication method, wherein the method is used for a first processing entity of a first communication device, and comprises:

   sending, by the first processing entity, a first registration request to a second entity, wherein the first registration request comprises a first identifier, the first identifier indicates one or more of the following information of the first processing entity: model information or data information, and a model parameter of the second entity is adjusted based on a real-time environment parameter;
   receiving, by the first processing entity, a first registration response sent by the second entity, wherein the first registration response indicates an input parameter of the second entity; and
   sending, by the first processing entity, a first response acknowledgment, wherein the first response acknowledgment indicates whether an output parameter of the first processing entity matches the input parameter of the second entity.

2. The method according to claim 1, wherein the first response acknowledgment indicates that the output parameter of the first processing entity successfully matches the input parameter of the second entity, and the method further comprises:

   performing, by the first processing entity, first processing on first input data to obtain first output data, wherein the first output data is an output of the first processing entity; and

transmitting, by the first processing entity, the first output data to the second entity through a first interface.

3. The method according to claim 2, wherein the first processing entity comprises an input adaptation module, a data space conversion module, and an output adaptation module, wherein

the input configuration module is configured to adapt a dimension of the first input data to an input dimension of the data space conversion module;
the data space conversion module is configured to perform the first processing on the first input data to obtain first intermediate output data; and
the output adaptation module is configured to perform dimension transformation on the first intermediate output data to obtain the first output data.

4. The method according to claim 2 or 3, wherein

the first processing comprises encoding and modulation, the first input data is a bitstream, and the first output data is a modulated symbol; or
the first processing comprises quantization, source encoding, channel encoding, and modulation, the first input data is a symbol sequence, and the first output data is a modulated symbol sequence.

5. The method according to any one of claims 2 to 4, wherein the first interface is further for transmission of one or more of the registration request, the registration response, or the response acknowledgment.

6. The method according to any one of claims 2 to 5, wherein the first interface defines a procedure and/or signaling of interaction between the first processing entity and the second entity.

7. The method according to claim 1, wherein the first response acknowledgment indicates a matching failure, and the method further comprises:

sending, by the first processing entity, a second registration request to a fourth entity, wherein the second registration request comprises the first identifier, the first identifier indicates one or more of the following information of the first processing entity: the model information or the data information, and a model parameter of the fourth entity is adjusted based on the real-time environment parameter;

receiving, by the first processing entity, a second registration response sent by the fourth entity, wherein the second registration response indicates an input parameter of the fourth entity; and
sending, by the first processing entity, a second response acknowledgment, wherein the second response acknowledgment indicates whether the output parameter of the first processing entity matches the input parameter of the fourth entity.

8. A communication method, wherein the method is used for a second entity of a second communication device, and comprises:

receiving, by the second entity, a first registration request sent by a first processing entity, wherein the first registration request comprises a first identifier, the first identifier indicates one or more of the following information of the first processing entity: model information or data information, and a model parameter of the second entity is adjusted based on a real-time environment parameter; and
sending, by the second entity, a first registration response to the second entity, wherein the first registration response indicates an input parameter of the second entity, and the input parameter of the second entity is used to determine whether an output parameter of the first processing entity matches the input parameter of the second entity.

9. The method according to claim 8, wherein the method further comprises: receiving, by the second entity, a first response acknowledgment, wherein the first response acknowledgment indicates that the output parameter of the first processing entity successfully matches the input parameter of the second entity; and the method further comprises:

receiving, by the second entity, first output data through a first interface, wherein the first output data is output data of the first processing entity;
performing, by the second entity, second processing on the first output data to obtain second output data; and
outputting, by the second entity, the second output data.

10. The method according to claim 9, wherein the outputting, by the second entity, the second output data comprises:
sending, by the second entity, the second output data to a third communication device.

11. The method according to claim 9 or 10, wherein the performing, by the second entity, second processing on the first output data to obtain second output data comprises:
mapping, by the second entity, the first output data to the second output data.

12. The method according to any one of claims 9 to 11, wherein the first interface is further for transmission of one or more of the following: the first registration request, the first registration response, or the first response acknowledgment.

13. The method according to any one of claims 9 to 12, wherein the first interface defines a procedure and/or signaling of interaction between the first processing entity and the second entity.

14. The method according to any one of claims 8 to 13, wherein when sending the first registration response, the second entity starts first response acknowledgment timing, and when the response acknowledgment timing expires, the second entity sends a first response acknowledgment timeout indication to a first control entity.

15. The method according to any one of claims 1 to 14, wherein the model information comprises one or more of the following: a model purpose, a model type, a model scale, model precision, or model performance.

16. The method according to any one of claims 1 to 15, wherein the data information comprises one or more of the following: a type of to-be-processed data, a dimension of to-be-processed data, or precision of to-be-processed data.

17. The method according to any one of claims 1 to 16, wherein the output parameter of the first processing entity comprises one or more of the following content of the output data of the first processing entity: a type, a dimension, or precision; and the input parameter of the second entity comprises one or more of the following content of input data of the second entity: a type, a dimension, or precision.

18. The method according to any one of claims 1 to 17, wherein the model parameter of the second entity is adjusted based on the real-time environment parameter.

19. The method according to any one of claims 1 to 18, wherein the first processing entity and the second entity belong to a same communication device.

20. A communication method, comprising:

sending, by a third processing entity, a second registration request to a second entity, wherein the second registration request comprises a second identifier, the second identifier indicates one or more of model information or data information of the third processing entity, and a model parameter of the second entity is adjusted based on a real-time environment parameter;
receiving, by the third processing entity, a second registration response sent by the second entity, wherein the second registration response indicates an output parameter of the second entity; and
sending, by the third processing entity, a second response acknowledgment, wherein the second response acknowledgment indicates whether an input parameter of the third processing entity matches the output parameter of the second entity.

21. The method according to claim 20, wherein
the second response acknowledgment indicates that the input parameter of the third processing entity matches the output parameter of the second entity, and the method further comprises:
obtaining, by the third processing entity, second output data transmitted by the second entity, and performing third processing on the second output data to obtain third data.

22. The method according to claim 21, wherein

the third processing entity comprises an input adaptation module, a data space conversion module, and an output adaptation module, wherein
the input configuration module is configured to adapt a dimension of the second output data to an input dimension of the data space conversion module;
the data space conversion module is configured to perform the third processing on the second output data to obtain second intermediate output data; and
the output adaptation module is configured to perform dimension transformation on the second intermediate output data to obtain the third data.

23. The method according to any one of claims 20 to 22, wherein

the third processing comprises demodulation and channel decoding, the second output data is a modulated symbol, and the third data is a bitstream; or
the third processing comprises demodulation, channel decoding, and source decoding, the second output data is a modulated symbol sequence, and the third data is a symbol sequence.

24. The method according to any one of claims 20 to 23, wherein the second response acknowledgment indicates that the input parameter of the third processing entity fails to match the output parameter of the second entity, and the method further comprises:

sending, by the third processing entity, a second registration request to a fourth entity, wherein the second registration request comprises the second identifier, the second identifier indicates one or more of the model information or the data information of the third processing entity, and a model parameter of the fourth entity is adjusted based on the real-time environment parameter; receiving, by the third processing entity, a second registration response sent by the fourth entity, wherein the second registration response indicates an input parameter of the fourth entity; and sending, by the third processing entity, a second response acknowledgment, wherein the second response acknowledgment indicates whether the input parameter of the third processing entity matches the input parameter of the fourth entity.

25. A communication method, wherein the method comprises:

receiving, by a second entity, a second registration request sent by a third processing entity, wherein the second registration request comprises a second identifier, the second identifier indicates one or more of model information or data information of the third processing entity, and a model parameter of the second entity is adjusted based on a real-time environment parameter; and sending, by the second entity, a second registration response to the third processing entity, wherein the second registration response indicates an output parameter of the second entity, wherein the output parameter of the second entity is used to determine whether an input parameter of the third processing entity matches the output parameter of the second entity.

26. The method according to claim 25, wherein the second entity receives a second response acknowledgment, wherein the second response acknowledgment indicates that the input parameter of the third processing entity successfully matches the output parameter of the second entity; and the method further comprises:

performing, by the second entity, second processing on first output data to obtain second output data, wherein the first output data is output data of a first processing entity; and transmitting, by the second entity, the second output data to the third processing entity through a second interface.

27. The method according to claim 26, wherein the performing, by the second entity, second processing on first output data to obtain second output data comprises: mapping, by the second entity, the first output data to the second output data, wherein a mapping manner is adjusted based on the real-time environment parameter.

28. The method according to any one of claims 25 to 27, wherein when sending the second registration response, the second entity starts second response acknowledgment timing, and when the response acknowledgment timing expires, the second entity sends a second response acknowledgment timeout indication to a third control entity.

29. The method according to any one of claims 20 to 28, wherein the model information comprises one or more of the following: a model purpose, a model type, a model scale, model precision, or model performance.

30. The method according to any one of claims 20 to 29, wherein the data information comprises one or more of the following: a type of to-be-processed data, a dimension of to-be-processed data, or precision of to-be-processed data.

31. The method according to any one of claims 20 to 30, wherein

the input parameter of the third processing entity comprises one or more of a type, a dimension, or precision of input data of the third processing entity; and the output parameter of the second entity comprises one or more of a type, a dimension, or precision of output data of the second entity.

32. A communication apparatus, comprising a module or a unit configured to perform the method according to any one of claims 1 to 7 and claims 5 to 19, a module or a unit configured to perform the method according to any one of claims 8 to 19, a module or a unit configured to perform the method according to any one of claims 20 to 24 and claims 29 to 31, or a module or a unit configured to perform the method according to any one of claims 25 to 31.

**33.** A communication apparatus, comprising a processor, wherein the processor is coupled to a memory, the memory stores instructions, and the processor is configured to execute the instructions, to enable the communication apparatus to perform the method according to any one of claims 1 to 7 and claims 5 to 19, the method according to any one of claims 8 to 19, the method according to any one of claims 20 to 24 and claims 29 to 31, or the method according to any one of claims 25 to 31.

**34.** A computer-readable storage medium, comprising a computer program or instructions, wherein when the computer program or the instructions are executed on a computer, the method according to any one of claims 1 to 31 is performed.

**35.** A computer program product comprising instructions, wherein when the computer program product is executed on a computer, the method according to any one of claims 1 to 31 is performed.

**36.** A communication system, comprising an apparatus configured to perform the method according to any one of claims 1 to 7 and claims 5 to 19 and an apparatus configured to perform the method according to any one of claims 8 to 19.

**37.** A communication system, comprising an apparatus configured to perform the method according to any one of claims 20 to 24 and claims 29 to 31 and an apparatus configured to perform the method according to any one of claims 25 to 31.

$$\underset{f,\,g}{\mathrm{argmin}}\,\mathcal{L}(x, g(f(x)))$$

FIG. 1

Communication system 100

Access network
device 120

Terminal device 110

Terminal device 110

FIG. 2

Transmitter

Receiver

Channel

FIG. 3

Data 1 | First processing module 410 | Data 2 | First interface 440 | Second processing module 420 | Data 3 | Second interface 450 | Third processing module 430 | Data 4

FIG. 4

Communication
method 500

| First control entity | First processing entity | Second entity |

S500: Initiate registration
(identifier of the second entity)

S501: First registration
request (first identifier)

First registration
response timing

First registration response
timeout indication

S502: First registration
response (input parameter
of the second entity)

First response
acknowledgment timing

First response
acknowledgment
timeout indication

S503b: First response
acknowledgment
(matching fails)

S503a: First response
acknowledgment
(matching succeeds)

S504: First output data

FIG. 5

Communication
method 600

| Third control entity | Third processing entity | Second entity |

S600: Second registration
indication (identifier of the
second entity)

S601: Second
registration request
(second identifier)

Second registration
response timing

Second registration
response timeout

S602: Second registration
response (input parameter
of the second entity)

Second response
acknowledgment timing

Second response
acknowledgment timeout

S603b: Second response
acknowledgment
(matching fails)

S603a: Second response
acknowledgment (matching
succeeds)

FIG. 6

Communication
method 700

| First control entity | First processing entity | Second entity | Fourth entity |

S700: First registration
indication (identifier of
the second entity)

S701: First
registration request
(first identifier)

S702: First registration
response timing

S703: First registration
response timeout

S704: Third registration
indication (identifier of
the fourth entity)

S705: Third registration
request (first identifier)

FIG. 7

Communication
method 800

| First control entity | First processing entity | Second entity | Fourth entity |

S800: First registration indication (identifier of the second entity)

S801: First registration request (first identifier)

S802: First registration response (input parameter of the second entity)

S803: First registration response (matching fails)

S804: Third registration indication (identifier of the fourth entity)

S805: Third registration request (first identifier)

FIG. 8

Communication
method 900

| First control entity | First processing entity | Second entity | Fourth processing entity |

S900: First registration indication (identifier of the second entity)

S901: First registration request (first identifier)

S902: First registration response (input parameter of the second entity)

S903: First response acknowledgment timing

S904: First response acknowledgment timeout

S905: Fourth registration indication (identifier of the second entity)

S906: Third registration request (third identifier)

FIG. 9

Communication
method 1000

| First processing entity | | Second entity | | Third processing entity |
|---|---|---|---|---|

S1001: Perform first
processing on first input data
to obtain first output data

S1002: Transmit the first
output data through a first
interface

S1003: Perform second
processing on the first output data
to obtain second output data

S1004: Transmit the second
output data through a
second interface

S1005: Perform third processing
on the second output data to
obtain third data

FIG. 10

FIG. 11

FIG. 12

FIG. 13

1400

1410

Processing
unit

1420

Transceiver
unit

FIG. 14

1500

1520

Communication
interface

1510

Processor

1540

1530

Memory

FIG. 15

1600

1610

Processor

1620

Memory

FIG. 16

## INTERNATIONAL SEARCH REPORT

| International application No. |
| --- |
| **PCT/CN2023/082648** |

**A.   CLASSIFICATION OF SUBJECT MATTER**

H04W 16/22(2009.01)i

According to International Patent Classification (IPC) or to both national classification and IPC

**B.   FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, WPABSC, ENTXTC, VEN, DWPI: 人工智能, 注册, 响应, 指示, 参数, 调整, 神经网络, 自适应, 模型训练, 改变, artificial, intelligence, registration, response, indicate, parameter, adaptive, model, training, change

**C.   DOCUMENTS CONSIDERED TO BE RELEVANT**

| Category* | Citation of document, with indication, where appropriate, of the relevant passages | Relevant to claim No. |
| --- | --- | --- |
| A | US 2022060390 A1 (HUAWEI TECHNOLOGIES CO., LTD.) 24 February 2022 (2022-02-24) <br> description, paragraphs 2-42 | 1-37 |
| A | CN 110073301 A (STRONG FORCE IOT PORTFOLIO 2016 LLC) 30 July 2019 (2019-07-30) <br> entire document | 1-37 |
| A | US 2021397796 A1 (CITRIX SYSTEMS, INC.) 23 December 2021 (2021-12-23) <br> entire document | 1-37 |
| A | US 2022019186 A1 (MOKA MIND SOFTWARE LTDA) 20 January 2022 (2022-01-20) <br> entire document | 1-37 |
| A | US 2022020064 A1 (TENCENT TECHNOLOGY (SHENZHEN) CO., LTD.) 20 January 2022 (2022-01-20) <br> entire document | 1-37 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **14 June 2023** | **19 June 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/082648**

| Patent document cited in search report | | | Publication date (day/month/year) | Patent family member(s) | | | Publication date (day/month/year) |
|---|---|---|---|---|---|---|---|
| US | 2022060390 | A1 | 24 February 2022 | US | 11588907 | B2 | 21 February 2023 |
| | | | | WO | 2022037239 | A1 | 24 February 2022 |
| CN | 110073301 | A | 30 July 2019 | CA | 3072045 | A1 | 07 February 2019 |
| | | | | US | 2019324432 | A1 | 24 October 2019 |
| | | | | US | 11199837 | B2 | 14 December 2021 |
| | | | | US | 2019324439 | A1 | 24 October 2019 |
| | | | | US | 11209813 | B2 | 28 December 2021 |
| | | | | WO | 2019028269 | A2 | 07 February 2019 |
| | | | | WO | 2019028269 | A3 | 25 April 2019 |
| | | | | JP | 2020530159 | A | 15 October 2020 |
| | | | | KR | 20200037816 | A | 09 April 2020 |
| | | | | EP | 3662331 | A2 | 10 June 2020 |
| | | | | EP | 3662331 | A4 | 28 April 2021 |
| | | | | US | 2020089214 | A1 | 19 March 2020 |
| | | | | US | 11231705 | B2 | 25 January 2022 |
| US | 2021397796 | A1 | 23 December 2021 | US | 11568152 | B2 | 31 January 2023 |
| | | | | WO | 2021255484 | A1 | 23 December 2021 |
| | | | | AU | 2020356799 | A1 | 20 January 2022 |
| | | | | AU | 2020356799 | A8 | 07 April 2022 |
| | | | | AU | 2020356799 | B2 | 08 September 2022 |
| US | 2022019186 | A1 | 20 January 2022 | BR | 102018075445 | A2 | 16 June 2020 |
| | | | | WO | 2020113305 | A1 | 11 June 2020 |
| US | 2022020064 | A1 | 20 January 2022 | JP | 2022529178 | A | 17 June 2022 |
| | | | | JP | 7206419 | B2 | 17 January 2023 |
| | | | | WO | 2021036589 | A1 | 04 March 2021 |

Form PCT/ISA/210 (patent family annex) (July 2022)

**REFERENCES CITED IN THE DESCRIPTION**

**Patent documents cited in the description**

• CN 202210283863